# EUROPÄISCHE PATENTSCHRIFT

(11) **EP 3 205 535 B1**
(45) Veröffentlichungstag und Bekanntmachung des Hinweises auf die Patenterteilung: **18.09.2019**
(21) Anmeldenummer: 17156228.3
(22) Anmeldetag: 15.02.2017
(51) Int. Cl.: B60P 1/44

(54) **VERFAHREN ZUM BETREIBEN EINER HUBLADEBÜHNE UND HUBLADEBÜHNE**
METHOD FOR OPERATING A PLATFORM LIFT AND PLATFORM LIFT
PROCÉDÉ DE FONCTIONNEMENT D'UN HAYON ÉLÉVATEUR ET HAYON ÉLÉVATEUR

(30) Priorität: 15.02.2016 DE 102016102634
(43) Veröffentlichungstag der Anmeldung: 16.08.2017
(73) Patentinhaber: Bär Management- und Beteiligungsgesellschaft mbH, 74078 Heilbronn (DE)
(72) Erfinder: Bär, Tobias, 74078 Heilbronn (DE); Klink, Norman, 74243 Langenbrettach (DE)
(74) Vertreter: DREISS Patentanwälte PartG mbB

(56) Entgegenhaltungen:
- DE-A1- 19 957 499
- DE-B4- 10 254 035

## Beschreibung

Die Erfindung betrifft ein Verfahren zum Betreiben einer Hubladebühne bei einem Kraftfahrzeug umfassend ein Zugfahrzeug und ein damit verbindbares Anhängerfahrzeug, mit einem jeweiligen durch Anschlusskomponenten an das Kraftfahrzeug montierten Hub- und Schwenkwerk, welches motorisch, insbesondere hydraulisch antreibbar ist, mit einer durch das Hub- und Schwenkwerk heb- und senkbaren Plattform, die in allen Hubstellungen in einer gewählten Lage haltbar ist, wobei die Plattform außerdem im auf Niveau eines Laderaums des Kraftfahrzeugs angehobenen Zustand von einer horizontalen Schwenkstellung in eine vertikale Schwenkstellung schwenkbar ist, in der sie den Laderaum des Kraftfahrzeugs verschließt oder hinter einer den Laderaum verschließenden Tür positioniert ist, und umgekehrt von der vertikalen Schwenkstellung in die horizontale Schwenkstellung schwenkbar ist, oder wobei die Plattform in eine Verstaustellung unterhalb des Laderaums des Kraftfahrzeugs bringbar ist und hierbei zueinander schwenkbare Plattformbereiche gegeneinander verschwenkt und gefaltet werden, und mit einem Antrieb für das Hub- und Schwenkwerk, wobei der Antrieb ein Hydraulikaggregat, insbesondere mit einem Elektromotor zum Antrieb einer Hydraulikpumpe des Hydraulikaggregats, umfasst oder elektromotorisch ausgebildet ist, wobei das Heben und Senken und Verschwenken der Plattform oder von Plattformteilen mittels einer elektrischen oder elektronischen Steuereinrichtung gesteuert wird, wobei eine Fernbedienung zur Fernsteuerung der elektrischen oder elektronischen Steuereinrichtung auf Basis drahtloser und insbesondere digital codierter Kommunikation vorgesehen ist mit einem durch den Bediener mitführbaren Handbedienteil und mit einem einer ersten Steuereinrichtung für eine erste Hubladebühne bei dem Zugfahrzeug zugeordneten ersten Sende/Empfangsteil und mit einem einer zweiten Steuereinrichtung für eine zweite Hubladebühne bei dem Anhängerfahrzeug zugeordneten zweiten Sende/Empfangsteil, wobei das Handbedienteil und das erste und zweite Sende/Empfangsteil Sende-/Empfangseinrichtungen umfassen, die ausgebildet sind, miteinander drahtlos zu kommunizieren.

Bis in die jüngere Vergangenheit wurden Hubladebühnen dadurch bedient, dass zunächst entweder vom Fahrerhaus aus oder mittels eines Schlüssels an einer Bedienkonsole am hinteren Ende des Fahrzeugs eine Versorgung der Steuereinrichtung der Hubladebühne mit Steuerspannung eingeschaltet wurde. Sodann konnten durch eine Bedienperson typischerweise mittels beidhändiger Bedienung von an der Bedienkonsole vorgesehenen Schwenkhebeln die verschiedenen Funktionen des Hub- und Schwenkwerks angesteuert und ausgeführt werden, also insbesondere das Verschwenken der Plattform zwischen der vertikalen und der horizontalen Schwenkstellung und das Heben und Senken der Plattform in ihrer horizontalen Schwenkstellung zwischen dem Niveau des Ladebodens des Aufbaus und des Erdbodens oder einer Zwischenposition.

Insbesondere durch die Anmelderin ist auch schon eine Hubladebühne der eingangs beschriebenen Art bekannt geworden, bei der eine Fernbedienung zur Fernsteuerung der elektrischen oder elektronischen Steuereinrichtung vorgesehen ist.

Auch DE 10254035 B4 und DE 19957499 A1 offenbaren fernsteuerbare Hubladebühnen.

Beim Betreiben einer Hubladebühne mit einer Fernbedienung oder Fernbedienungseinrichtung mit einem Handbedienteil und einem Sende/Empfangsteil, wie eingangs erwähnt, stellt sich beim Zusammenstellen von Zugfahrzeug und Anhängerfahrzeug oder beim Wechsel eines Anhängerfahrzeugs die Aufgabe, dass das dem Zugfahrzeug zugeordnete Handbedienteil mit dem Sende/Empfangsteil des betreffenden Anhängers gekoppelt werden muss, damit eine Fernsteuerung der Steuereinrichtung des Anhängerfahrzeugs durch das Handbedienteil überhaupt möglich ist. Der Begriff des Koppelns oder der Kopplung von Handbedienteil und Sende/Empfangsteil bedeutet vorliegend, dass die beiden Teile derart aufeinander abgestimmt sind, dass ein Signalaustausch zum Initiieren von Fernsteuerungsmaßnahmen überhaupt führen kann. Das Handbedienteil und das Sende/Empfangsteil erkennen einander im gekoppelten Zustand als zur Ausführung von Steuerungsmaßnahmen autorisierte Geräteeinheiten an. Beispielsweise ist dem Sende/Empfangsteil hierfür eine identifizierende Kennung (ID) des Handbedienteils bekannt, die bei Signalaustausch mitübertragen und als solche erkannt werden kann. Die Herbeiführung einer Kopplung zwischen dem Handbedienteil und dem Sende/Empfangsteil eines neuen Anhängerfahrzeugs erfordert derzeit umfangreiche durch eine Bedienperson auszuführende Konfigurationsmaßnahmen oder alternativ die Bereitstellung von dem jeweiligen Zugfahrzeug oder Anhängerfahrzeug fest zugeordneten und mit diesen werksseitig gekoppelten Handbedienteilen. Es besteht auch die grundsätzliche Gefahr, dass bei Ausführung einer Kopplung mit einem neuen Anhängerfahrzeug tatsächlich eine Kopplung mit Sende/Empfangsteilen von daneben stehenden Fahrzeugen irrtümlich ausgeführt wird.

Der vorliegenden Erfindung liegt die Aufgabe zugrunde, das eingangs beschriebene Verfahren zum Betreiben einer Hubladebühne komfortabler und für den Benutzer einfacher zu gestalten, wobei Fehlbedienungen dennoch weitestgehend ausgeschlossen werden sollen.

Diese Aufgabe wird bei einem Verfahren der genannten Art erfindungsgemäß dadurch gelöst, dass der Zustand wenigstens eines Verbindungsparameters zwischen dem Zugfahrzeug und dem Anhängerfahrzeug erfasst wird und dass beim Feststellen eines bestimmten Zustands des Verbindungsparameters automatisch eine Kopplung des Handbedienteils und des zweiten Sende/Empfangsteils ausgeführt wird derart, dass das Handbedienteil und das zweite Sende/Empfangsteil zur Bedienung der zweiten Hubladebühne des Anhängerfahrzeugs über die Fernbedienung drahtlos verbindbar sind,
und/oder
automatisch eine Kopplung des ersten Sende/Empfangsteils und des zweiten Sende/Empfangsteils ausgeführt wird derart,
dass das Handbedienteil und das erste Sende/Empfangsteil und weiter das erste und das zweite Sende/Empfangsteil zur Bedienung der zweiten Hubladebühne des Anhängerfahrzeugs über die Fernbedienung drahtlos verbindbar sind,
wobei die Kopplung in beiden Fällen durch drahtlos ausgetauschte Signale zwischen dem Handbedienteil und wenigstens einem Sende/Empfangsteil oder zwischen den Sende/Empfangsteilen erfolgt.

Erfindungsgemäß wird also vorgeschlagen, dass die Fernbedienung so ausgebildet ist bzw. derart erfolgt, dass mittels ein und desselben Handbedienteils eine Fernsteuerung der ersten Hubladebühne bei dem Zugfahrzeug als auch der zweiten Hubladebühne bei dem Anhängerfahrzeug ermöglicht wird, wobei eine hierfür erforderliche Kopplung der Komponenten automatisch herbeigeführt wird, und zwar vorzugsweise unmittelbar im Anschluss an das körperliche Verbinden von Zugfahrzeug und Anhängerfahrzeug. Es wird hierfür ein Verbindungsparameter herangezogen und erfasst. Sobald dieser Verbindungsparameter einen bestimmten Zustand einnimmt und gegebenenfalls weitere Parameter, insbesondere Zeitparameter, erfüllt sind, wird automatisch eine Kopplung der Komponenten ausgeführt. Auf diese Weise ist es nicht mehr erforderlich, dass eine Bedienperson diesbezüglich tätig werden muss. Im gekoppelten Zustand des Handbedienteils von diesem ausgesandte Fernbedienungssignale, die ein Sende/Empfangsteil erhält, werden dann als zulässige Steuersignale akzeptiert und über die zugeordnete Steuereinrichtung der Hubladebühne dann zur Verstellung der Komponenten des Hub- und Schwenkwerks umgesetzt.

Diese automatisch herbeigeführte Kopplung schützt bereits sehr weitgehend vor Fehlfunktion. Da sich die automatische Ausführung der Kopplung gewissermaßen unmittelbar an das körperliche Verbinden von Zugfahrzeug und Anhängerfahrzeug anschließen kann, können die Komponenten und Steuereinrichtungen auch so ausgebildet werden, dass eine Kopplung nur innerhalb eines vorbestimmten Zeitintervalls ausgeführt wird.

Hierfür wird in Weiterbildung der Erfindung vorgeschlagen, dass beim Feststellen eines bestimmten Zustands des Verbindungsparameters eine Zeitmess/Timer-Vorrichtung aktiviert wird und dass die Kopplung des Handbedienteils und des zweiten Sende/Empfangsteils und/oder die Kopplung des ersten und des zweiten Sende/Empfangsteils nur dann automatisch ausgeführt wird, sofern hierfür erforderliche Signale innerhalb eines vorbestimmten Zeitintervalls Δtmax ausgetauscht werden (Anspruch 2). Dies erfolgt über die jeweiligen im Sende/Empfangsteil und im Handbedienteil vorgesehenen Sende/Empfangseinrichtungen. Werden entsprechend konzipierte Signale ausgetauscht, und zwar während und innerhalb des vorbestimmten Zeitintervalls, dessen Beginn oder Start durch Feststellen eines bestimmten Zustands des Verbindungsparameters ausgelöst wurde, dann wird das Handbedienteil mit dem Sende/Empfangsteil des Anhängerfahrzeugs und/oder die Sende/Empfangsteile miteinander gekoppelt.

In noch weitergehender Ausbildung der Erfindung wird vorgeschlagen, dass der Zustand wenigstens eines Verbindungsparameters bei dem Zugfahrzeug und wenigstens eines Verbindungsparameters bei dem Anhängerfahrzeug erfasst wird und dass beim Feststellen eines bestimmten Zustands des Verbindungsparameters bei dem Zugfahrzeug eine Zeitmess/Timer-Vorrichtung bei dem Zugfahrzeug aktiviert wird, und dass beim Feststellen eines bestimmten Zustands des Verbindungsparameters bei dem Anhängerfahrzeug eine Zeitmess/Timer-Vorrichtung bei dem Anhängerfahrzeug aktiviert wird,
und dass im Anschluss an das Aktivieren der jeweiligen Zeitmess/Timer-Vorrichtung von dem ersten Sende/Empfangsteil des Zugfahrzeugs und von dem zweiten Sende/Empfangsteil des Anhängerfahrzeugs Signale ausgesandt werden, welche jeweils eine durch die zugeordnete Zeitmess/Timer-Vorrichtung erhaltene Zeitinformation tragen,
und dass die Zeitinformationen dieser Signale verglichen werden und geprüft wird, ob sie sich um weniger als einen maximalen Wert (Δtmax) unterscheiden,
und dass, wenn dies der Fall ist, automatisch eine Kopplung des Handbedienteils und des zweiten Sende/Empfangsteils ausgeführt wird derart, dass das Handbedienteil und das zweite Sende/Empfangsteil zur Bedienung der zweiten Hubladebühne des Anhängerfahrzeugs über die Fernbedienung drahtlos verbindbar sind,
und/oder,
dass, wenn dies der Fall ist, automatisch eine Kopplung des ersten Sende/Empfangsteils und des zweiten Sende/Empfangsteils ausgeführt wird derart, dass das Handbedienteil und das erste Sende/Empfangsteil und weiter das erste und das zweite Sende/Empfangsteil zur Bedienung der zweiten Hubladebühne des Anhängerfahrzeugs über die Fernbedienung drahtlos verbindbar sind (Anspruch 3).

Insbesondere wird dann noch sicherer verhindert, dass versehentlich eine Kopplung eines Handbedienteils mit dem Sende/Empfangsteil eines beispielsweise daneben abgestellten Anhängerfahrzeugs eines anderen Kraftfahrzeugs ausgeführt wird oder umgekehrt ein fremdes Handbedienteil mit dem Sende/Empfangsteil des eigenen Anhängerfahrzeugs gekoppelt wird, da die Weiterbildung des Verfahrens eine sich automatisch ausführende Kopplung zwischen den Komponenten der Fernbedienung nur dann zulässt, wenn sich die verglichenen Zeitinformationen um weniger als einen maximalen Wert (Δtmax) unterscheiden. Das Handbedienteil und das Sende/Empfangsteil der Fernbedienung bzw. die beiden Sende/Empfangsteile von Zugfahrzeug und Anhängerfahrzeug sind also nur automatisch koppelbar, wenn die jeweilige Feststellung der Zustandsänderung des Verbindungsparameters bei dem Zugfahrzeug und bei dem Anhängerfahrzeug, was ja die Aktivierung der jeweiligen Zeitmess/Timer-Vorrichtung auslöst, innerhalb einer vorbestimmten maximalen Zeitdifferenz (Δtmax) erfolgt.

Es wird in Weiterbildung der Erfindung vorgeschlagen, dass der Verbindungsparameter die mechanische Verbindung zwischen Zugfahrzeug und Anhängerfahrzeug oder die pneumatische Verbindung zwischen Zugfahrzeug und Anhängerfahrzeug oder die elektrische Versorgung zwischen Zugfahrzeug und Anhängerfahrzeug oder ein CAN Buszustand ist oder eine Messgröße eines ABS-Sensors ist oder von einer solchen abgeleitet wird (Anspruch 4).

Weiter kann es sich als vorteilhaft erweisen, wenn als Verbindungsparameter das Ausstecken eines elektrischen Steckverbinders aus einer Parkaufnahme und/oder das Einstecken eines elektrischen Steckverbinders in eine Aufnahme am Zugfahrzeug oder am Anhängerfahrzeug dient und detektiert wird (Anspruch 5).

Der Verbindungsparameter bzw. der bestimmte Zustand des Verbindungsparameters können mittels hierfür ausgebildeter Sensorvorrichtungen erfasst oder überwacht werden. Diese Sensorvorrichtungen wirken dann mit einer Vorrichtung zum Starten oder Aktivieren der Zeitmess/Timer-Vorrichtung zusammen. Es ist aber auch denkbar und möglich, dass die Sensorvorrichtung zum Erfassen des Zustands des Verbindungsparameters und die Vorrichtung zum Aktivieren der Zeitmess/Timer-Vorrichtung eine hardwaremäßig zusammengehörige Einheit bilden und/oder hard- oder softwaremäßig bei der elektrischen oder elektronischen Steuereinrichtung realisiert sind.

Beispielsweise können mechanische Sensoren zur Erfassung einer mechanischen Verbindung von Zugfahrzeug und Anhängerfahrzeug vorgesehen sein. Es ist auch denkbar, dass über Drucksensoren eine pneumatische Verbindung zwischen Zugfahrzeug und Anhängerfahrzeug erfasst wird. Ebenso können Sensoren zum Erfassen einer elektrischen Versorgung zwischen Zugfahrzeug und Anhängerfahrzeug vorgesehen sein. Insbesondere kann die elektrische oder elektronische Steuereinrichtung der Hubladebühne des Anhängerfahrzeugs zur Erfassung eines CAN Buszustands ausgebildet und eingerichtet sein. Auch ABS Sensoren können zur der Erfassung des Zustands eines Verbindungsparameters eingesetzt werden.

Während bislang die Versorgung der Steuereinrichtung mit Steuerspannung und damit die Betriebsbereitschaft der Hubladebühne vom Fahrerhaus des Kraftfahrzeugs aus über eine Festverdrahtung oder Verkabelung oder mittels eines Schlüssels an der externen Bedienkonsole ein- und ausgeschaltet wurde, wird nunmehr vorgeschlagen, dass nach Ausführung der Kopplung die zweite Hubladebühne des Anhängerfahrzeugs mittels Fernsteuerung durch das Handbedienteil einschaltbar, d.h. mit Steuerspannung versorgbar ist (Anspruch 6). Sofern die Signalstärke der Funkverbindung hinreichend stark ist, kann dies ausgehend vom Fahrerhaus des Kraftfahrzeugs durch eine direkte Funkverbindung zwischen der Sende-/Empfangseinrichtung des Handbedienteils und der Sende-/Empfangseinrichtung des Sende/Empfangsteils des Anhängerfahrzeugs erfolgen. Sofern die Signalstärke hierfür nicht ausreichend ist, ist es möglich, dass das Sende/Empfangsteil des Zugfahrzeugs und dessen Sende-/Empfangseinrichtung als Zwischen- oder Weiterleitungsstation (Repeater-Station) fungieren, dass also das Fernbedienungssignal des Handbedienteils von dem Sende/Empfangsteil des Zugfahrzeugs empfangen und als Fernbedienungssignal zur Fernsteuerung der Hubladebühne des Anhängerfahrzeugs erkannt wird und mittels dessen Sende-/Empfangseinrichtung an das Sende/Empfangsteil des Anhängerfahrzeugs weitergeleitet wird.

Es erweist sich weiter als vorteilhaft, wenn die erfolgte Kopplung des Handbedienteils und des zweiten Sende/Empfangsteils und/oder die Kopplung des ersten Sende/Empfangsteils und des zweiten Sende/Empfangsteils in einer Speichereinrichtung gespeichert wird (Anspruch 7). Dies erweist sich als vorteilhaft, da solchenfalls auch nach Ausschalten und erneutem Einschalten der Steuerspannungsversorgung der Hubladebühne eine Autorisierung der Komponenten, also die Kopplung, erhalten bleibt.

Des Weiteren erweist sich eine Ausführung der Fernbedienung und des Verfahrens zum Betreiben der Hubladebühne als vorteilhaft, wonach nach der Kopplung des Handbedienteils und des ersten oder zweiten Sende/Empfangsteils eine aktive Anmeldung des Handbedienteils am Sende/Empfangsteil des Anhängerfahrzeugs bzw. des Zugfahrzeugs ausgeführt wird, um dann mittels Fernsteuerung durch das Handbedienteil das Hub- und Schwenkwerk zu verstellen (Anspruch 8). Nach dieser Ausführung stellt also die Kopplung des Handbedienteils mit einem jeweiligen Sende/Empfangsteil zunächst nur eine Autorisierung des Handbedienteils dahingehend dar, dass dessen Funksignale als autorisierte Fernbedienungssignale zur Fernsteuerung der jeweiligen Hubladebühne erkannt und akzeptiert werden. Die tatsächliche aktive Ansteuerung, d.h. das Verstellen des Hub- und Schwenkwerks, mittels Fernsteuerung, erfordert eine weitere aktive Anmeldung des Handbedienteils am Sende/Empfangsteil. Auf diese Weise kann sichergestellt werden, dass jeweils nur ein Handbedienteil zur aktiven Ansteuerung, d.h. zum Verstellen des Hub- und Schwenkwerks, zu einer Zeit verwendet werden kann. Es werden also nur Fernbedienungssignale eines einzigen gerade aktiv angemeldeten Handbedienteils akzeptiert.

In Weiterbildung dieses Erfindungsgedankens erweist es sich als vorteilhaft, wenn die aktive Anmeldung des Handbedienteils am Sende/Empfangsteil durch das Handbedienteil wieder getrennt wird oder getrennt werden kann oder nach Eintritt von Bedingungen automatisch wieder getrennt wird (Anspruch 9).

Des Weiteren wird Schutz in Anspruch genommen für eine Hubladebühne zur Durchführung des vorausgehend geschilderten Verfahrens, mit den Merkmalen des Anspruchs 10: Erfindungsgemäß ist vorgesehen, dass eine Vorrichtung zum Erfassen des Zustands eines Verbindungsparameters zwischen Zugfahrzeug und Anhängerfahrzeug vorgesehen ist und dass die Fernbedienung so ausgebildet ist, dass beim Feststellen eines bestimmten Zustands des Verbindungsparameters durch die Vorrichtung automatisch eine Kopplung des Handbedienteils und des zweiten Sende/Empfangsteils ausgeführt wird derart, dass das Handbedienteil und das zweite Sende/Empfangsteil zur Bedienung der zweiten Hubladebühne (2b) des Anhängerfahrzeugs über die Fernbedienung drahtlos verbindbar sind,
und/oder
automatisch eine Kopplung des ersten Sende/Empfangsteils und des zweiten Sende/Empfangsteils ausgeführt wird derart, dass das Handbedienteil und das erste Sende/Empfangsteil und weiter das erste und das zweite Sende/Empfangsteil zur Bedienung der zweiten Hubladebühne des Anhängerfahrzeugs über die Fernbedienung drahtlos verbindbar sind, wobei die Kopplung in beiden Fällen durch drahtlos ausgetauschte Signale zwischen dem Handbedienteil und wenigstens einem Sende/Empfangsteil oder zwischen den Sende/Empfangsteilen erfolgt (Anspruch 10). Die Vorrichtung zum Erfassen des Zustands eines Verbindungsparameters ist vorzugsweise bei dem Zugfahrzeug vorgesehen. Sie könnte aber auch bei dem Anhängerfahrzeug oder bei dem Handbedienteil vorgesehen sein.

In Weiterbildung der Erfindung wird vorgeschlagen, dass eine Zeitmess/Timer-Vorrichtung vorgesehen ist, die beim Feststellen eines bestimmten Zustands des Verbindungsparameters aktiviert wird und dass die Fernbedienung weiter so ausgebildet ist, dass die Kopplung des Handbedienteils und des zweiten Sende/Empfangsteils und/oder die Kopplung des ersten und des zweiten Sende/Empfangsteils nur dann automatisch ausgeführt wird, sofern hierfür erforderliche Signale innerhalb eines vorbestimmten Zeitintervalls Δtmax ausgetauscht werden (Anspruch 11).

Gemäß einer bevorzugten Ausführungsform wird vorgeschlagen, dass bei dem Zugfahrzeug und bei dem Anhängerfahrzeug je eine Vorrichtung zum Erfassen des Zustands eines Verbindungsparameters zwischen Zugfahrzeug und Anhängerfahrzeug und je eine Zeitmess/Timer-Vorrichtung vorgesehen sind, wobei die Aktivierung der jeweiligen Zeitmess/Timer-Vorrichtung durch Feststellen eines bestimmten Zustands des Verbindungsparameters ausgelöst wird, und dass das Handbedienteil, die ersten und zweiten Sende/Empfangsteile, sowie deren Sende-/Empfangseinrichtungen und die zugehörigen elektrischen oder elektronischen Steuereinrichtungen so ausgebildet sind, dass im Anschluss an das Aktivieren der jeweiligen Zeitmess/Timer-Vorrichtung von dem ersten Sende/Empfangsteil des Zugfahrzeugs und von dem zweiten Sende/Empfangsteil des Anhängerfahrzeugs Signale ausgesandt werden, welche jeweils eine durch die zugeordnete Zeitmess/Timer-Vorrichtung erhaltene Zeitinformation tragen,
und dass eine Vergleichsvorrichtung vorgesehen ist, mittels derer die Zeitinformationen dieser Signale verglichen werden und geprüft wird, ob sie sich um weniger als einen maximalen Wert (Δtmax) unterscheiden,
und dass, wenn dies der Fall ist, automatisch eine Kopplung des Handbedienteils und des zweiten Sende/Empfangsteils ausgeführt wird derart, dass das Handbedienteil und das zweite Sende/Empfangsteil zur Bedienung der zweiten Hubladebühne des Anhängerfahrzeugs über die Fernbedienung drahtlos verbindbar sind,
und/oder,
dass, wenn dies der Fall ist, automatisch eine Kopplung des ersten Sende/Empfangsteils (44b) und des zweiten Sende/Empfangsteils ausgeführt wird derart, dass das Handbedienteil und das erste Sende/Empfangsteil und weiter das erste und das zweite Sende/Empfangsteil zur Bedienung der zweiten Hubladebühne des Anhängerfahrzeugs über die Fernbedienung drahtlos verbindbar sind (Anspruch 12). Wie oben erwähnt können die Vorrichtung zum Erfassen des Zustands des Verbindungsparameters und die Zeitmess/Timer-Vorrichtung und die Vergleichsvorrichtung eine hardwaremäßig zusammengehörige Einheit bilden und/oder hard- oder softwaremäßig bei der jeweiligen elektrischen oder elektronischen Steuereinrichtung der zugehörigen Hubladebühne realisiert sein.

Denkbar ist, dass die Vorrichtung zum Erfassen des Zustands des Verbindungsparameters ausgebildet ist, die mechanische Verbindung zwischen Zugfahrzeug und Anhängerfahrzeug oder die pneumatische Verbindung zwischen Zugfahrzeug und Anhängerfahrzeug oder die elektrische Versorgung zwischen Zugfahrzeug und Anhängerfahrzeug oder einen CAN Buszustand oder eine Messgröße eines ABS-Sensors zu erfassen (Anspruch 13) .

Weiter kann es sich als vorteilhaft erweisen, wenn die Vorrichtung zum Erfassen des Zustands des Verbindungsparameters zur Erfassung des Aussteckens eines elektrischen Steckverbinders aus einer Parkaufnahme und/oder zur Erfassung des Einsteckens eines elektrischen Steckverbinders in eine Aufnahme am Zugfahrzeug oder am Anhängerfahrzeug ausgebildet ist (Anspruch 14).

Als ganz besonders vorteilhaft erweist es sich, wenn die Vergleichsvorrichtung bei dem Zugfahrzeug oder bei dem Handbedienteil ausgebildet ist. Wenn die Vergleichsvorrichtung bei dem Zugfahrzeug ausgebildet ist, so erweist sich der typische Umstand als vorteilhaft, dass die Autorisierungsdaten oder die Kennung des Handbedienteils bei dem Sende/Empfangsteil des Zugfahrzeugs bekannt sind, da das Handbedienteil und das Sende/Empfangsteil des Zugfahrzeugs in aller Regel bereits miteinander gekoppelt sind. Die Kopplung zwischen Handbedienteil und Sende/Empfangsteil des Anhängerfahrzeugs kann dann dadurch hergestellt werden, dass die Autorisierungsdaten des Handbedienteils durch das Sende/Empfangsteil des Zugfahrzeugs an das Sende/Empfangsteil des Anhängerfahrzeugs übertragen werden können. Die Kopplung kann also auch ausgeführt werden, wenn das Handbedienteil nicht unmittelbar vor Ort ist. Wenn die Vergleichsvorrichtung bei dem Handbedienteil ausgebildet ist, so ist dies ebenfalls möglich, erfordert aber die Anwesenheit des Handbedienteils zum Zeitpunkt der automatischen Ausführung der Kopplung. Es wäre auch denkbar, dass die Vergleichsvorrichtung bei dem Anhängerfahrzeug ausgebildet ist.

Es erweist sich weiter als vorteilhaft, wenn das Handbedienteil zur Einschaltung der Versorgung der Steuereinrichtung des Anhängerfahrzeugs mit Steuerspannung ausgebildet ist. Auf diese Weise kann auf die seither übliche Einschaltung vom Fahrerhaus aus und damit auf eine Festverdrahtung zwischen Hubladebühne und Fahrerhaus verzichtet werden.

Weiter erweist es sich als vorteilhaft, wenn eine Speichereinrichtung zur Speicherung der Kopplung des Handbedienteils und des zweiten Sende/Empfangsteils und/oder der Kopplung des ersten Sende/Empfangsteils und des zweiten Sende/Empfangsteils vorgesehen ist.

Wie eingangs bereits erwähnt, erweist es sich als vorteilhaft, wenn das Handbedienteil nach der Kopplung des Handbedienteils und des ersten oder zweiten Sende/Empfangsteils zur Anmeldung am Sende/Empfangsteil des Anhängerfahrzeugs oder des Zugfahrzeugs ausgebildet ist, um dann mittels der Fernbedienung durch das Handbedienteil das betreffende Hub- und Schwenkwerk zu verstellen (Anspruch 15). Hierbei erweist es sich als vorteilhaft, wenn eine Anmeldung des Handbedienteils am betreffenden Sende/Empfangsteil nur möglich ist, wenn zu diesem Zeitpunkt kein anderes Handbedienteil angemeldet ist.

Weiter erweist es sich als vorteilhaft, wenn die Anmeldung des Handbedienteils am Sende/Empfangsteil durch das Handbedienteil wieder getrennt werden kann oder nach Eintritt von Bedingungen automatisch wieder getrennt wird.

Weiter erweist es sich als vorteilhaft, wenn eine mit der jeweiligen Steuereinrichtung zusammenwirkende Einrichtung zur Erfassung der Hub- und/oder Schwenkstellung der jeweiligen Plattform vorgesehen ist, und dass die Steuereinrichtung zur Meldung der Hub- und/oder Schwenkstellung der Plattform an das Handbedienteil mittels Kommunikation über die Fernbedienung ausgebildet ist und dass die Hub- und/oder Schwenkstellung der Plattform an dem Handbedienteil visuell und/oder akustisch anzeigbar und/oder durch Vibration vermittelbar ist. Hierbei kann es sich als vorteilhaft erweisen, wenn die Hub- und/oder Schwenkstellung nur an ein Handbedienteil im angemeldeten Zustand gesandt wird.

Weitere Einzelheiten, Merkmale und Vorteile der Erfindung ergeben sich aus den beigefügten Patentansprüchen und aus der zeichnerischen Darstellung und der nachfolgenden Beschreibung einer vorteilhaften Ausführungsform der erfindungsgemäßen Hubladebühne. In der Zeichnung zeigt:
Figur 1 eine schematische Darstellung einer Hubladebühne;
Figur 2 eine schematische Darstellung einer Steuereinrichtung und Fernbedienung bei einer erfindungsgemäßen Hubladebühne; und
Figur 3 eine schematische Darstellung eines Kraftfahrzeugs mit erfindungsgemäßer Hubladebühne; und
Figur 4 eine schematische Darstellung eines Kraftfahrzeugs umfassend ein Zugfahrzeug und ein Anhängerfahrzeug, die jeweils eine Hubladebühne aufweisen.

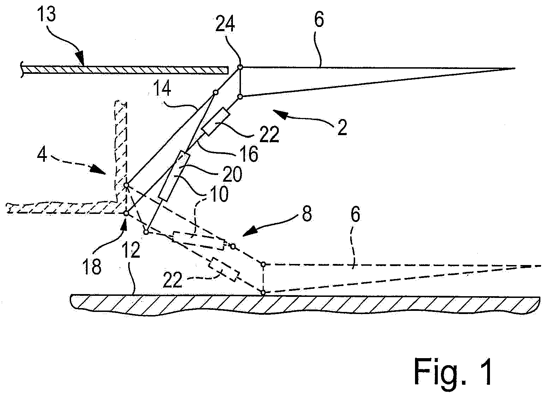

Figur 1 zeigt eine Hubladebühne 2, die an einem Heckbereich 4 eines Kraftfahrzeugs, beispielsweise eines Lastkraftfahrzeugs, angebaut ist. Eine Plattform 6 der Hubladebühne 2 ist von einem im bevorzugt dargestellten Fall parallelogrammförmig ausgebildeten Hub- und Schwenkwerk 8 so gehalten, dass sie mittels wenigstens eines Hubzylinders 10 heb- und senkbar ist und dabei ihre im Wesentlichen horizontale Lage beibehält. Das in Figur 1 nur schematisch dargestellte Hub- und Schwenkwerk 8 ist beidseits links und rechts des Kraftfahrzeugs vorgesehen, wobei nicht zwingend auf jeder Seite die noch zu erläuternden Zylinder 10 vorgesehen werden müssen.

In Figur 1 ist die Plattform 6 mitsamt dem Hub- und Schwenkwerk 6 mit durchgezogenen Linien in einer gegenüber einer Grundfläche 12, auf der das Kraftfahrzeug abgestellt ist, angehobenen Lage dargestellt. Auch die Ladeebene 13 des Fahrzeugaufbaus ist dargestellt. Die gestrichelte Darstellung zeigt die auf die Grundfläche 12 abgesenkte Plattform 6 und die entsprechende Lage des Hub- und Schwenkwerks 8.

Das Hub- und Schwenkwerk 8 umfasst beidseits je einen oberen Tragarm 14, der die obere Strebe eines Parallelogramms bildet, und einen unteren Arm 16, der die untere Strebe des Parallelogramms bildet. Der obere Tragarm 14 und der untere Arm 16 sind über nicht im Einzelnen dargestellte Anschlusskomponenten 18 schwenkbar am Kraftfahrzeug angeordnet. Diese Anschlusskomponenten 18 umfassen beispielsweise einen Querträger, an dem sämtliche Komponenten des Hub- und Schwenkwerks 8 gehalten sind und der insgesamt beispielsweise an Längsträgern des Kraftfahrzeugs montierbar ist. Die Tragarme 14, 16 sind an ihrem kraftfahrzeugabgewandten Ende jeweils gelenkig mit der Plattform 6 verbunden. Gegen den oberen Tragarme 14 stützt sich der Hubzylinder 20 ab; er stützt sich fahrzeugseitig gelenkig gegen die Anschlusskomponenten 18 der Hubladebühne ab. In dem unteren Tragarm 16 des Hub- und Schwenkwerks 8 ist ein Neige- oder Parallelzylinder 22 vorgesehen, mittels dessen die Länge des unteren Tragarms 16 verstellbar ist. Hierdurch lässt sich die Plattform 6 um eine horizontale Achse 24 nach oben oder unten neigen und weiter in ihre vertikale Stellung, die sogenannte Fahrstellung, schwenken, in der sie den Aufbau des Kraftfahrzeugs verschließt, wenn keine zusätzlichen Türen vorgesehen sind.

Durch das im beispielhaft dargestellten Fall parallelogrammförmig ausgebildete Hub- und Schwenkwerk 8 behält die Plattform 6 beim Heben und Senken ihre im Wesentlichen horizontale Lage bei.

Die Erfindung kann jedoch auch in Verbindung mit anderen Arten von Hubladebühnen, beispielsweise in Verbindung mit einem Vertikallift oder einer Hubladebühne mit einem elektromagnetisch oder elektromotorisch betätigten Hub- und Schwenkwerk, angewendet werden.

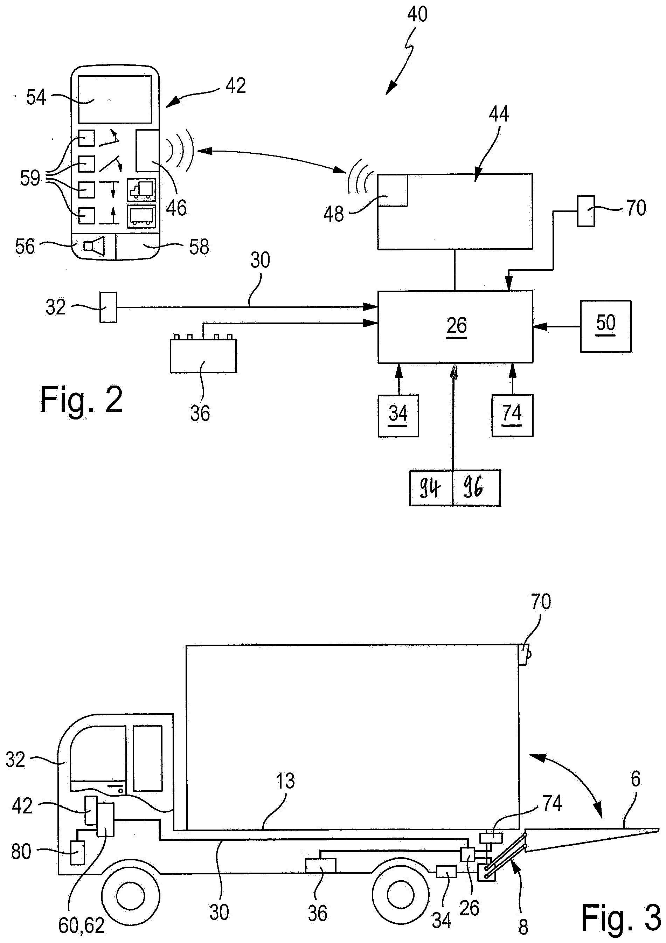

Die Hubladebühne weist eine in Figuren 2 und 3 dargestellte elektrische oder elektronische Steuereinrichtung 26 auf, mittels derer die Komponenten des Hub- und Schwenkwerks 8 angesteuert und verstellt werden.

Wie in Figuren 2 und 3 schematisch dargestellt ist die Steuereinrichtung 26 bei vorbekannten Hubladebühnen typischerweise über eine Festverdrahtung oder Verkabelung 30 mit dem Fahrerhaus 32 des Kraftfahrzeugs verbunden. Über diese Festverdrahtung oder Verkabelung 30 wird bei vorbekannten Hubladebühnen eine Versorgung der Steuereinrichtung 26 mit Steuerspannung und damit die Betriebsbereitschaft der Hubladebühne vom Fahrerhaus 32 des Kraftfahrzeugs aus eingeschaltet und auch wieder ausgeschaltet. Alternativ kann dies mittels einer Schlüsselschaltung ausgehend von einer externen Bedienkonsole 34 in der Nähe der Hubladebühne 2 erfolgen. Hierdurch werden also die Steuereinrichtung 26 und damit auch die Antriebskomponenten für das Hub- und Schwenkwerk 8 mit Steuerspannung aus einer Spannungsquelle 36 des Kraftfahrzeugs versorgt beziehungsweise wieder von der Spannungsquelle 36 getrennt.

Bei der hier in Rede stehenden erfindungsgemäßen Hubladebühne ist eine insgesamt mit dem Bezugszeichen 40 bezeichnete Fernsteuerung oder Fernsteuerungseinrichtung vorgesehen, die ein durch den Bediener mitführbares Handbedienteil 42 und ein der Steuereinrichtung 26 zugeordnetes Sende/Empfangsteil 44 umfasst, die jeweils eine Sende-/Empfangseinrichtung 46, 48 aufweisen, welche auf Basis drahtloser und vorzugsweise digital codierter Kommunikation, also insbesondere funkbasiert arbeiten, wobei wenigstens grundsätzlich auch eine Infrarotkommunikation denkbar wäre.

Die Hubladebühne 2 umfasst ferner eine Einrichtung 50 zur Erfassung der Hub- und/oder Schwenkstellung der Plattform 6 der Hubladebühne, wobei diese Einrichtung 50 in an sich beliebiger Weise mittels an sich beliebiger Sensoren ausgebildet sein kann, solange sie die erfassten Informationen zur Hub- und Schwenkstellung an die Steuereinrichtung 26 in weiterverarbeitbarer oder auswertbarer Form weiterzugeben vermag. Die Steuereinrichtung 26 ist zur Meldung der Hub- und/oder Schwenkstellung der Plattform 6 an das Handbedienteil 42 mittels drahtloser Kommunikation über die Fernbedienung 40 ausgebildet.

Hierfür bedarf es insbesondere einer Kopplung des Handbedienteils 42 mit dem Sende/Empfangsteil 44, derart, dass das Handbedienteil 42 bei dem Sende/Empfangsteil 44 als autorisiertes Bediengerät individualisiert ist. Die Kopplung des zu einem Zugfahrzeug gehörenden Handbedienteils mit dem zugehörigen Sende/Empfangsteil der Hubladebühne wird typischerweise bereits werksseitig ausgeführt; sie ist aber änderbar insbesondere wenn ein Handbedienteil durch ein anderes ersetzt wird. Zur Ausführung der Fernsteuerung bedarf es weiter der aktiven Anmeldung des Handbedienteils 42 bei dem Sende/Empfangsteil 44, damit ein Signalaustausch zwischen Handbedienteil 42 und Sende/Empfangsteil 44 zur Fernsteuerung der Steuereinrichtung 26 der Hubladebühne führen kann. Die Kopplung des Handbedienteils 42 und des Sende/Empfangsteils 44 stellt also erst eine Autorisierung des Handbedienteils 42 bei dem Sende/Empfangsteil 44 dar. Erst nach der vorerwähnten aktiven Anmeldung des Handbedienteils 42 kann über die Fernbedienung 40 das Hub- und Schwenkwerk 8 der Hubladebühne verstellt werden. Dies erweist sich als vorteilhaft, da weiter vorgesehen ist, dass immer nur ein Handbedienteil bei dem Sende/Empfangsteil angemeldet sein kann. Es ist hierdurch sichergestellt, dass nicht durch Steuersignale verschiedener Handbedienteile die korrekte Funktionsweise der Fernbedienung beeinträchtigt werden kann.

Nach Anmeldung des Handbedienteils 42 an dem Sende/Empfangsteil 44, und zwar entweder unmittelbar hieran anschließend oder erst wenn ausgehend von dem Handbedienteil 42 eine Ansteuerung zum Verstellen des Hub- und Schwenkwerks 8 vorgenommen werden soll, wird über die Steuereinrichtung 26 und das Sende/Empfangsteil 44 die momentane Hub- und/oder Schwenkstellung der Plattform 6 an das Handbedienteil 42 mittels drahtloser Kommunikation gesandt. Das Handbedienteil 42 beziehungsweise dessen Sende-/Empfangseinrichtung 46 empfängt diese drahtlose Information und bringt die Hub- und/oder Schwenkstellung auf dem Handbedienteil 42 zur Anzeige. Dies kann visuell über ein Display 54 oder akustisch über einen Lautsprecher 56 und/oder durch Vibration mittels einer Vibrationseinrichtung 58 erfolgen. Vorzugsweise erst im Anschluss an diese Übermittlung der Hub- und/oder Schwenkstellung und deren Anzeige durch das Handbedienteil 42 lässt sich durch Betätigung von Steuertasten 59 mittels der Fernsteuerung 40 das Hub- und Schwenkwerk 8 der Hubladebühne 2 verstellen.

Eine andere oder weitere Verstellung der Hub- und/oder Schwenkstellung der Plattform 6 über die Fernbedienung 40 ist beispielsweise erst nach Erhalt einer weiteren Meldung der aktuellen Hub- und/oder Schwenkstellung der Plattform 6 bei dem Handbedienteil 42 und vorzugsweise erst nachdem diese neue Hub- und/oder Schwenkstellung durch das Handbedienteil 42 zur Anzeige beziehungsweise zur Vermittlung an den Bediener gebracht wurde, möglich.

Des Weiteren ist in vorteilhafter Weise vorgesehen, dass die Steuereinrichtung 26 zur Rückmeldung eines Einschaltzustands, also der Versorgung der Steuereinrichtung 26 mit Steuerspannung aus der Spannungsquelle 36, an das Handbedienteil 42 ausgebildet ist. Dieser Einschaltzustand wird dann an dem Handbedienteil 42 wiederrum visuell über das Display 54 oder akustisch oder durch Vibration zur Anzeige gebracht. Vorzugsweise erst nach Erhalt dieser Rückmeldung des Einschaltzustands an das Handbedienteil 42 ist das Handbedienteil 42 zur Fernsteuerung der Steuereinrichtung 26 nutzbar.

Wie in Figur 3 angedeutet ist weiter eine Prüfeinrichtung 60 vorhanden, die zur Feststellung ausgebildet ist, ob sich das Handbedienteil 42 im Fahrerhaus 32 des Kraftfahrzeugs befindet. Diese Prüfeinrichtung 60 kann beispielsweise durch eine Aufnahmestation 62 für das Handbedienteil 42 ausgebildet sein, in welche das Handbedienteil 42, beispielsweise ähnlich wie ein Mobiltelefon in eine Ladestation, einsetzbar ist. Die Prüfeinrichtung 60 und Handbedienteil 42 wirken vorzugsweise derart zusammen, dass mittels des Handbedienteils 42 auf Basis drahtloser Kommunikation mit dem Sendeempfangsteil 44 die Einschaltung der Versorgung der Steuereinrichtung 26 mit Steuerspannung und damit die Betriebsbereitschaft der Hubladebühne vom Fahrerhaus 32 des Kraftfahrzeugs aus mittels Fernsteuerung durch das Handbedienteil 42 nur dann ausführbar ist, wenn sich das Handbedienteil 42 im Fahrerhaus 32 befindet und dies durch die Prüfeinrichtung 60 automatisch festgestellt ist. Die Prüfeinrichtung 60 und das Handbedienteil 42 wirken also im Sinne einer Betriebsfreigabe für die Fernbedienung 40 zusammen.

Die soeben erwähnte Einschaltung der Versorgung der Steuereinrichtung 26 mit Steuerspannung und damit die Betriebsbereitschaft der Hubladebühne ist zu unterscheiden von einer Fernsteuerung der Steuereinrichtung 26 zur aktiven Ansteuerung, das heißt zum Verstellen des Hub- und Schwenkwerks 8. Nach einem weiteren Erfindungsgedanken ist diese aktive Ansteuerung, das heißt die Verstellung des Hub- und Schwenkwerks 8, mittels Fernsteuerung durch das Handbedienteil 42 vom Fahrerhaus des Kraftfahrzeugs aus nur dann möglich, wenn die Anwesenheit des Handbedienteils 42 durch die Prüfeinrichtung 60 im Fahrerhaus 32 festgestellt ist. Insbesondere ist dies nur dann möglich, wenn sich das Handbedienteil 42 in der Aufnahmestation 62 befindet.

Aus Figur 3 ist eine weitere vorteilhafte Ausführungsform ersichtlich wonach der Hubladebühne eine Rückfahrkamera 70 zugeordnet ist, welche mit der Steuereinrichtung 26 der Hubladebühne derart zusammenwirkt, dass ein aktivierter Betriebszustand der Rückfahrkamera 70 an die Steuereinrichtung 26 übermittelt wird, insbesondere nur als digitales Signal "ein/aus". Von der Steuereinrichtung 26 wird dieser aktivierte Betriebszustand über die Fernbedienung 40 an das Handbedienteil 42 übermittelt und dort dahingehend verarbeitet, dass eine Fernsteuerung mittels des Handbedienteils 42 vom Fahrerhaus 32 des Kraftfahrzeugs aus vorzugsweise nur dann möglich ist, wenn der aktivierte Betriebszustand der Rückfahrkamera 70 an das Handbedienteil 42 weitergeleitet wurde. Das eigentliche Bildsignal der Rückfahrkamera 70 wird typischerweise über andere Signalverbindungen an einem Kameradisplay im Fahrerhaus 32 visuell wahrnehmbar zur Anzeige gebracht.

Wenn das Handbedienteil 42 außerhalb des Fahrerhauses 32 zur Fernsteuerung der Steuereinrichtung 26 eingesetzt werden soll, so kommt eine Einrichtung 74 zur Nahbereichserkennung zum Einsatz, die in Figur 2 und 3 schematisch angedeutet ist. Mittels dieser Einrichtung 74 ist feststellbar, ob sich das Handbedienteil 42 innerhalb einer vorbestimmten Distanz zu dem Hub- und Schwenkwerk 8 oder innerhalb einer vorbestimmten Signalstärke zwischen den Sende-/Empfangseinrichtungen 46, 48 befindet. Nur wenn dies der Fall ist kann mittels des Handbedienteils 42 die Versorgung der Steuereinrichtung 26 mit Steuerspannung und die Fernsteuerung der Steuereinrichtung 26 zum Zwecke der Verstellung des Hub- und Schwenkwerks 8 mittels des Handbedienteils 42 von außerhalb des Fahrerhauses 32 ausgeführt werden.

Weiterhin erweist es sich als vorteilhaft, wenn die eingangs erwähnte Prüfeinrichtung 60 mit einer Startunterbrechungseinrichtung 80 des Kraftfahrzeugs zusammenwirkt derart, dass die Startunterbrechungseinrichtung 80 automatisch erst dann deaktiviert wird, wenn das Handbedienteil 42 sich im Fahrerhaus 32 befindet, also mitgeführt wird, und dies von der Prüfeinrichtung 60 automatisch festgestellt wurde. Auf diese Weise wird eine Verliersicherung für das Handbedienteil 42 realisiert.

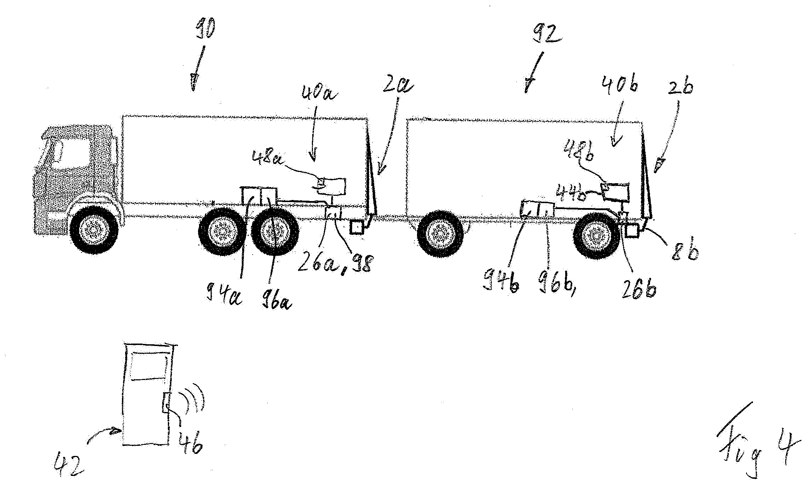

Figur 4 verdeutlicht schematisch das erfindungsgemäße Verfahren und die erfindungsgemäße Hubladebühne. Figur 4 zeigt ein Kraftfahrzeug umfassend ein Zugfahrzeug 90 und ein Anhängerfahrzeug 92, die jeweils mit einer Hubladebühne 2a, 2b ausgerüstet sind. Es werden nachfolgend entsprechende Bezugszeichen, wie vorausgehend im Zusammenhang mit Figuren 1 bis 3 beschrieben, verwendet, wobei eine Zuordnung zu dem Zugfahrzeug 90 bzw. zu dem Anhängerfahrzeug 92 durch Anfügung von a, b verdeutlicht wird. Einer jeweiligen Hubladebühne 2a, 2b ist jeweils eine elektrische oder elektronische Steuereinrichtung 26a, b bei dem jeweiligen Fahrzeug zugeordnet. Wie vorausgehend ausgeführt, ist jeweils eine Fernbedienung oder Fernbedienungseinrichtung 40a, 40b vorgesehen, die jeweils ein Sende/Empfangsteil 44a, 44b umfasst, die jeweils mit Sende/Empfangseinrichtungen 48a, 48b ausgestattet sind und mit dem Handbedienteil 42 zusammenwirken sollen.

Erfindungsgemäß soll bei der Ausführung einer neuen Paarung eines Zugfahrzeugs 90 mit einem Anhängerfahrzeug 92 automatisch eine Kopplung des zu dem Zugfahrzeug 90 gehörenden Handbedienteils 42 mit dem Sende/Empfangsteil 44b der Hubladebühne des Anfängerfahrzeugs 92 herbeigeführt werden. Hierfür ist erfindungsgemäß bei dem Zugfahrzeug 90 und bei dem Anhängerfahrzeug 92 je eine Vorrichtung 94a, 94b zum Erfassen eines Verbindungsparameters zwischen Zugfahrzeug 90 und Anhängerfahrzeug 92 vorgesehen. Diese Vorrichtungen 94a, 94b sind ausgebildet, die mechanische oder die pneumatische Verbindung oder die elektrische Versorgung zwischen Zugfahrzeug 90 und Anhängerfahrzeug 92 oder einen CAN Buszustand oder einen sonstigen Parameter zu erfassen. Die Vorrichtungen 94a, 94b wirken jeweils mit einer Zeitmess/Timer-Vorrichtung 96a, 96b zusammen. Sofern der Verbindungsparameter einen bestimmten Zustand einnimmt und dies über die Vorrichtungen 94a, 94b erfasst wird, wird die jeweilige Zeitmess/Timer-Vorrichtung 96a, 96b aktiviert. Ferner werden von dem ersten Sende/Empfangsteil 44a des Zugfahrzeugs 90 und von dem zweiten Sende/Empfangsteil 44b des Anhängerfahrzeugs 92 Signale ausgesandt, welche jeweils eine durch die zugeordnete Zeitmess/Timer-Vorrichtung 96a, 96b erhaltene Zeitinformation tragen. Ferner ist eine Vergleichsvorrichtung 98 vorgesehen, mittels derer die Zeitinformationen dieser Signale verglichen werden und geprüft wird, ob sie sich um weniger als einen maximalen Wert Δtmax unterscheiden. Wenn dies der Fall ist, wird automatisch eine Kopplung des Handbedienteils 42 und des zweiten Sende/Empfangsteils 44b und/oder eine Kopplung des ersten Sende/Empfangsteils 44a und des zweiten Sende/Empfangsteils 44b ausgeführt. Vorzugsweise werden alle drei Komponenten, also Handbedienteil 42 und die beiden Sende/Empfangsteile 44a, 48b miteinander gekoppelt.

Die Vergleichsvorrichtung 98 kann bei dem Zugfahrzeug 90 oder bei dem Anhängerfahrzeug 92 oder bei dem Handbedienteil 42 vorgesehen sein. Es erweist sich als vorteilhaft, wenn die Vergleichsvorrichtung 98 bei dem Zugfahrzeug 90 vorgesehen ist. Das Sende/Empfangsteil 44a bzw. die Steuereinrichtung 26a des Zugfahrzeugs 90 verfügen nämlich typischerweise über Identifikationsdaten des mit ihnen gekoppelten Handbedienteils 42 können daher bei der Ausführung des erfindungsgemäßen Verfahrens diese Daten an das Sende/Empfangsteil 44b des Anhängerfahrzeugs 92 übermitteln. Es ist daher möglich, automatisch eine Kopplung herbeizuführen auch wenn das Handbedienteil gerade nicht in der Nähe ist.

Die Kopplung des Handbedienteils 42 mit den Sende/Empfangsteilen 44a, 44b oder die Kopplung der Sende/Empfangsteile 44a, 44b untereinander muss also erfindungsgemäß nicht mehr durch Aktionen einer Bedienperson herbeigeführt werden sondern erfolgt automatisch. Gleichzeitig wird ein hohes Maß an Sicherheit realisiert, dass nur korrekt zusammengehörige Komponenten der Fernbedienung miteinander gekoppelt werden, d.h. Fehlkopplung mit in der Nähe befindlichen Zugfahrzeugen oder Anhängerfahrzeugen vermieden werden.

## Patentansprüche

1. Verfahren zum Betreiben einer Hubladebühne (2, 2a, 2b) bei einem Kraftfahrzeug umfassend ein Zugfahrzeug (90) und ein damit verbindbares Anhängerfahrzeug (92), mit einem jeweiligen durch Anschlusskomponenten (18) an das Kraftfahrzeug montierten Hub- und Schwenkwerk (8), welches motorisch, insbesondere hydraulisch antreibbar ist, mit einer durch das Hub- und Schwenkwerk (8) heb- und senkbaren Plattform (6), die in allen Hubstellungen in einer gewählten Lage haltbar ist, wobei die Plattform (6) außerdem im auf Niveau eines Laderaums des Kraftfahrzeugs angehobenen Zustand von einer horizontalen Schwenkstellung in eine vertikale Schwenkstellung schwenkbar ist, in der sie den Laderaum des Kraftfahrzeugs verschließt oder hinter einer den Laderaum verschließenden Tür positioniert ist, und umgekehrt von der vertikalen Schwenkstellung in die horizontale Schwenkstellung schwenkbar ist,
oder
wobei die Plattform (6) in eine Verstaustellung unterhalb des Laderaums des Kraftfahrzeugs bringbar ist und hierbei zueinander schwenkbare Plattformbereiche gegeneinander verschwenkt und gefaltet werden,
und mit einem Antrieb für das Hub- und Schwenkwerk (8), wobei das Heben und Senken und Verschwenken der Plattform (6) oder von Plattformteilen mittels einer elektrischen oder elektronischen Steuereinrichtung (26, 26a, 26b) gesteuert wird, wobei eine Fernbedienung (40, 40a, 40b) zur Fernsteuerung der elektrischen oder elektronischen Steuereinrichtung (26, 26a, 26b) auf Basis drahtloser und insbesondere digital codierter Kommunikation vorgesehen ist mit einem durch den Bediener mitführbaren Handbedienteil (42) und mit einem einer ersten Steuereinrichtung (26a) für eine erste Hubladebühne (2a) bei dem Zugfahrzeug (90) zugeordneten ersten Sende/Empfangsteil (44a) und mit einem einer zweiten Steuereinrichtung (26b) für eine zweite Hubladebühne (2b) bei dem Anhängerfahrzeug (92) zugeordneten zweiten Sende/Empfangsteil (44b), wobei das Handbedienteil (42) und das erste und zweite Sende/Empfangsteil (44a, 44b) Sende-/Empfangseinrichtungen (46, 48a, 48b) umfassen, die zur drahtlosen Kommunikation ausgebildet sind, **dadurch gekennzeichnet,**
**dass** der Zustand wenigstens eines Verbindungsparameters zwischen dem Zugfahrzeug (90) und dem Anhängerfahrzeug (92) erfasst wird und dass beim Feststellen eines bestimmten Zustands des Verbindungsparameters automatisch eine Kopplung des Handbedienteils (42) und des zweiten Sende/Empfangsteils (44b) ausgeführt wird derart, dass das Handbedienteil (42) und das zweite Sende/Empfangsteil (44b) zur Bedienung der zweiten Hubladebühne (2b) des Anhängerfahrzeugs (92) über die Fernbedienung (40b) drahtlos verbindbar sind,
und/oder
automatisch eine Kopplung des ersten Sende/Empfangsteils (44a) und des zweiten Sende/Empfangsteils (44b) ausgeführt wird derart, dass das Handbedienteil (42) und das erste Sende/Empfangsteil (44a) und weiter das erste und das zweite Sende/Empfangsteil (44a, 44b) zur Bedienung der zweiten Hubladebühne (2b) des Anhängerfahrzeugs (92) über die Fernbedienung (40a, 40b) drahtlos verbindbar sind,
wobei die Kopplung in beiden Fällen durch drahtlos ausgetauschte Signale zwischen dem Handbedienteil (42) und wenigstens einem Sende/Empfangsteil (44a, 44b) oder zwischen den Sende/Empfangsteilen (44a, 44b) erfolgt.

2. Verfahren nach Anspruch 1, **dadurch gekennzeichnet, dass** beim Feststellen eines bestimmten Zustands des Verbindungsparameters eine Zeitmess/Timer-Vorrichtung (96) aktiviert wird und dass die Kopplung des Handbedienteils (42) und des zweiten Sende/Empfangsteils (44b) und/oder die Kopplung des ersten und des zweiten Sende/Empfangsteils (44a, 44b) nur dann automatisch ausgeführt wird, sofern hierfür erforderliche Signale innerhalb eines vorbestimmten Zeitintervalls Δtmax ausgetauscht werden.

3. Verfahren nach Anspruch 1 oder 2, **dadurch gekennzeichnet, dass** der Zustand wenigstens eines Verbindungsparameters bei dem Zugfahrzeug (90) und wenigstens eines Verbindungsparameters bei dem Anhängerfahrzeug (92) erfasst wird und dass beim Feststellen eines bestimmten Zustands des Verbindungsparameters bei dem Zugfahrzeug eine Zeitmess/Timer-Vorrichtung (96a) bei dem Zugfahrzeug (90) aktiviert wird, und dass beim Feststellen eines bestimmten Zustands des Verbindungsparameters bei dem Anhängerfahrzeug eine Zeitmess/Timer-Vorrichtung (96b) bei dem Anhängerfahrzeug (92) aktiviert wird,
und dass im Anschluss an das Aktivieren der jeweiligen Zeitmess/Timer-Vorrichtung (96a, 96b) von dem ersten Sende/Empfangsteil (44a) des Zugfahrzeugs und von dem zweiten Sende/Empfangsteil (44b) des Anhängerfahrzeugs Signale ausgesandt werden, welche jeweils eine durch die zugeordnete Zeitmess/Timer-Vorrichtung (96a, 96b) erhaltene Zeitinformation tragen,
und dass die Zeitinformationen dieser Signale verglichen werden und geprüft wird, ob sie sich um weniger als einen maximalen Wert (Δtmax) unterscheiden,
und dass, wenn dies der Fall ist, automatisch eine Kopplung des Handbedienteils (42) und des zweiten Sende/Empfangsteils (44b) ausgeführt wird derart, dass das Handbedienteil (42) und das zweite Sende/Empfangsteil (44b) zur Bedienung der zweiten Hubladebühne (2b) des Anhängerfahrzeugs (92) über die Fernbedienung (40b) drahtlos verbindbar sind,
und/oder,
dass, wenn dies der Fall ist, automatisch eine Kopplung des ersten Sende/Empfangsteils (44a) und des zweiten Sende/Empfangsteils (44b) ausgeführt wird derart, dass das Handbedienteil (42) und das erste Sende/Empfangsteil (44a) und weiter das erste und das zweite Sende/Empfangsteil (44a, 44b) zur Bedienung der zweiten Hubladebühne (2b) des Anhängerfahrzeugs (92) über die Fernbedienung (40a, 40b) drahtlos verbindbar sind.

4. Verfahren nach Anspruch 1, 2 oder 3, **dadurch gekennzeichnet, dass** der Verbindungsparameter die mechanische Verbindung zwischen Zugfahrzeug (90) und Anhängerfahrzeug (92) oder die pneumatische Verbindung zwischen Zugfahrzeug (90) und Anhängerfahrzeug (92) oder die elektrische Versorgung zwischen Zugfahrzeug (90) und Anhängerfahrzeug (92) oder ein CAN Buszustand ist oder eine Messgröße eines ABS-Sensors ist oder von einer solchen abgeleitet wird.

5. Verfahren nach einem oder mehreren der vorstehenden Ansprüche, **dadurch gekennzeichnet, dass** als Verbindungsparameter das Ausstecken eines elektrischen Steckverbinders aus einer Parkaufnahme und/oder das Einstecken eines elektrischen Steckverbinders in eine Aufnahme am Zugfahrzeug (90) oder am Anhängerfahrzeug (92) dient und detektiert wird.

6. Verfahren nach einem oder mehreren der vorstehenden Ansprüche, **dadurch gekennzeichnet, dass** nach Ausführung der Kopplung des Handbedienteils (42) und des zweiten Sende/Empfangsteils (44b) und/oder der Kopplung des ersten Sende/Empfangsteils (44a) und des zweiten Sende/Empfangsteils (44b) die zweite Hubladebühne (2b) des Anhängerfahrzeugs (92) mittels Fernsteuerung durch das Handbedienteil (42) einschaltbar, d.h. mit Steuerspannung versorgbar ist.

7. Verfahren nach einem oder mehreren der vorstehenden Ansprüche, **dadurch gekennzeichnet, dass** die Kopplung des Handbedienteils (42) und des zweiten Sende/Empfangsteils (44b) und/oder die Kopplung des ersten Sende/Empfangsteils (44a) und des zweiten Sende/Empfangsteils (44b) in einer Speichereinrichtung gespeichert wird.

8. Verfahren nach einem oder mehreren der vorstehenden Ansprüche, **dadurch gekennzeichnet, dass** nach der Kopplung des Handbedienteils (42) und des ersten oder zweiten Sende/Empfangsteils (44a, 44b) eine aktive Anmeldung des Handbedienteils (42) am Sende/Empfangsteil (44a oder 44b) des Anhängerfahrzeugs oder des Zugfahrzeugs ausgeführt wird, um dann mittels Fernsteuerung durch das Handbedienteil (42) das Hub- und Schwenkwerk (8, 8a, 8b) zu verstellen.

9. Verfahren nach einem oder mehreren der vorstehenden Ansprüche, **dadurch gekennzeichnet, dass** die aktive Anmeldung des Handbedienteils (42) am ersten oder zweiten Sende/Empfangsteil (44a, 44b) durch das Handbedienteil (42) wieder getrennt wird oder getrennt werden kann oder nach Eintritt von Bedingungen automatisch wieder getrennt wird.

10. Vorrichtung zur Durchführung des Verfahrens nach einem oder mehreren der vorstehenden Ansprüche bei einem Kraftfahrzeug umfassend ein Zugfahrzeug (90) und ein damit verbindbares Anhängerfahrzeug (92), mit einem jeweiligen durch Anschlusskomponenten an das Kraftfahrzeug montierten Hub- und Schwenkwerk (8, 8a, 8b), welches motorisch, insbesondere hydraulisch antreibbar ist, mit einer durch das Hub- und Schwenkwerk (8, 8a, 8b) heb- und senkbaren Plattform (6), die in allen Hubstellungen in einer gewählten Lage haltbar ist, wobei die Plattform (6) außerdem im auf Niveau eines Laderaums des Kraftfahrzeugs angehobenen Zustand von einer horizontalen Schwenkstellung in eine vertikale Schwenkstellung schwenkbar ist, in der sie den Laderaum des Kraftfahrzeugs verschließt oder hinter einer den Laderaum verschließenden Tür positioniert ist, und umgekehrt von der vertikalen Schwenkstellung in die horizontale Schwenkstellung schwenkbar ist,
oder
wobei die Plattform (6) in eine Verstaustellung unterhalb des Laderaums des Kraftfahrzeugs bringbar ist und hierbei zueinander schwenkbare Plattformbereiche gegeneinander verschwenkt und gefaltet werden,
und mit einem Antrieb für das Hub- und Schwenkwerk (8, 8a, 8b), wobei das Heben und Senken und Verschwenken der Plattform (6) oder von Plattformteilen mittels einer jeweiligen elektrischen oder elektronischen Steuereinrichtung (26, 26a, 26b) gesteuert wird, wobei eine Fernbedienung (40, 40a, 40b) zur Fernsteuerung der elektrischen oder elektronischen Steuereinrichtung (26, 26a, 26b) auf Basis drahtloser und insbesondere digital codierter Kommunikation vorgesehen ist mit einem durch den Bediener mitführbaren Handbedienteil (42) und mit einem einer ersten Steuereinrichtung (26a) für eine erste Hubladebühne (2a) bei dem Zugfahrzeug (90) zugeordneten ersten Sende/Empfangsteil (44a) und mit einem einer zweiten Steuereinrichtung (26b) für eine zweite Hubladebühne (2b) in dem Anhängerfahrzeug (92) zugeordneten zweiten Sende/Empfangsteil (44b), wobei das Handbedienteil (42) und das erste und zweite Sende/Empfangsteil (44a, 44b) Sende-/Empfangseinrichtungen (46, 48a, 48b) umfassen, die zur drahtlosen Kommunikation ausgebildet sind, **dadurch gekennzeichnet, dass** eine Vorrichtung (94, 94a, 94b) zum Erfassen des Zustands eines Verbindungsparameters zwischen Zugfahrzeug (90) und Anhängerfahrzeug (92) vorgesehen ist und dass die Fernbedienung (40, 40a, 40b) so ausgebildet ist, dass beim Feststellen eines bestimmten Zustands des Verbindungsparameters durch die Vorrichtung (94, 94a, 94b)
automatisch eine Kopplung des Handbedienteils (42) und des zweiten Sende/Empfangsteils (44b) ausgeführt wird derart, dass das Handbedienteil (42) und das zweite Sende/Empfangsteil (44b) zur Bedienung der zweiten Hubladebühne (2b) des Anhängerfahrzeugs (92) über die Fernbedienung (40b) drahtlos verbindbar sind,
und/oder
automatisch eine Kopplung des ersten Sende/Empfangsteils (44a) und des zweiten Sende/Empfangsteils (44b) ausgeführt wird derart, dass das Handbedienteil (42) und das erste Sende/Empfangsteil (44a) und weiter das erste und das zweite Sende/Empfangsteil (44a, 44b) zur Bedienung der zweiten Hubladebühne (2b) des Anhängerfahrzeugs (92) über die Fernbedienung (40a, 40b) drahtlos verbindbar sind,
wobei die Kopplung in beiden Fällen durch drahtlos ausgetauschte Signale zwischen dem Handbedienteil (42) und wenigstens einem Sende/Empfangsteil (44a, 44b) oder zwischen den Sende/Empfangsteilen (44a, 44b) erfolgt.

11. Vorrichtung nach Anspruch 10, **dadurch gekennzeichnet, dass** eine Zeitmess/Timer-Vorrichtung (96, 96a, 96b) vorgesehen ist, die beim Feststellen eines bestimmten Zustands des Verbindungsparameters aktiviert wird und dass die Fernbedienung (40, 40a, 40b) weiter so ausgebildet ist, dass die Kopplung des Handbedienteils (42) und des zweiten Sende/Empfangsteils (44b) und/oder die Kopplung des ersten und des zweiten Sende/Empfangsteils (44a, 44b) nur dann automatisch ausgeführt wird, sofern hierfür erforderliche Signale innerhalb eines vorbestimmten Zeitintervalls Δtmax ausgetauscht werden.

12. Vorrichtung nach Anspruch 11, **dadurch gekennzeichnet, dass** bei dem Zugfahrzeug und bei dem Anhängerfahrzeug je eine Vorrichtung (94a, 94b) zum Erfassen des Zustands eines Verbindungsparameters zwischen Zugfahrzeug (90) und Anhängerfahrzeug (92) und je eine Zeitmess/Timer-Vorrichtung (96a, 96b) vorgesehen sind, wobei die Aktivierung der jeweiligen Zeitmess/Timer-Vorrichtung (96a, 96b) durch Feststellen eines bestimmten Zustands des Verbindungsparameters ausgelöst wird, und dass das Handbedienteil (42), die ersten und zweiten Sende/Empfangsteile (44a, 44b), sowie deren Sende-/Empfangseinrichtungen (46, 48a, 48b) und die zugehörigen elektrischen oder elektronischen Steuereinrichtungen (26a, 26b) so ausgebildet sind, dass im Anschluss an das Aktivieren der jeweiligen Zeitmess/Timer-Vorrichtung (96a, 96b) von dem ersten Sende/Empfangsteil (44a) des Zugfahrzeugs und von dem zweiten Sende/Empfangsteil (44b) des Anhängerfahrzeugs Signale ausgesandt werden, welche jeweils eine durch die zugeordnete Zeitmess/Timer-Vorrichtung (96a, 96b) erhaltene Zeitinformation tragen, und dass eine Vergleichsvorrichtung (98) vorgesehen ist, mittels derer die Zeitinformationen dieser Signale verglichen werden und geprüft wird, ob sie sich um weniger als einen maximalen Wert (Δtmax) unterscheiden, und dass, wenn dies der Fall ist, automatisch eine Kopplung des Handbedienteils (42) und des zweiten Sende/Empfangsteils (44b) ausgeführt wird derart, dass das Handbedienteil (42) und das zweite Sende/Empfangsteil (44b) zur Bedienung der zweiten Hubladebühne (2b) des Anhängerfahrzeugs (92) über die Fernbedienung (40b) drahtlos verbindbar sind,
und/oder,
dass, wenn dies der Fall ist, automatisch eine Kopplung des ersten Sende/Empfangsteils (44b) und des zweiten Sende/Empfangsteils (44b) ausgeführt wird derart, dass das Handbedienteil (42) und das erste Sende/Empfangsteil (44a) und weiter das erste und das zweite Sende/Empfangsteil (44a, 44b) zur Bedienung der zweiten Hubladebühne (2b) des Anhängerfahrzeugs (92) über die Fernbedienung (40a, 40b) drahtlos verbindbar sind.

13. Vorrichtung nach einem oder mehreren der Ansprüche 10-12, **dadurch gekennzeichnet, dass** die Vorrichtung (94) zum Erfassen des Zustands des Verbindungsparameters ausgebildet ist, die mechanische Verbindung zwischen Zugfahrzeug (90) und Anhängerfahrzeug (92) oder die pneumatische Verbindung zwischen Zugfahrzeug (90) und Anhängerfahrzeug (92) oder die elektrische Versorgung zwischen Zugfahrzeug (90) und Anhängerfahrzeug (92) oder einen CAN Buszustand oder eine Messgröße eines ABS-Sensors zu erfassen.

14. Vorrichtung nach einem oder mehreren der Ansprüche 10-13, **dadurch gekennzeichnet, dass** die Vorrichtung (94) zum Erfassen des Zustands des Verbindungsparameters zur Erfassung des Aussteckens eines elektrischen Steckverbinders aus einer Parkaufnahme und/oder zur Erfassung des Einsteckens eines elektrischen Steckverbinders in eine Aufnahme am Zugfahrzeug oder am Anhängerfahrzeug ausgebildet ist.

15. Vorrichtung nach einem oder mehreren der Ansprüche 10 - 14, **dadurch gekennzeichnet, dass** das Handbedienteil (42) nach der Kopplung des Handbedienteils (42) und des ersten oder zweiten Sende/Empfangsteils (44a, 44b) zur Anmeldung am Sende/Empfangsteil (44b, 44a) des Anhängerfahrzeugs oder des Zugfahrzeugs ausgebildet ist, um dann mittels der Fernbedienung (40) durch das Handbedienteil (42) das betreffende Hub- und Schwenkwerk (8, 8a, 8b) zu verstellen.

## Claims

1. Method for operating a tail lift (2, 2a, 2b) in a motor vehicle comprising a towing vehicle (90) and a trailer vehicle (92) which is connectable thereto, having a relevant lift and pivot mechanism (8) mounted on the motor vehicle by means of connecting components (18), which mechanism can be motor driven, in particular hydraulically driven, having a platform (6) which can be raised and lowered by means of the lift and pivot mechanism (8) and can be held in a selected position in all lifting positions, the platform (6), when raised to the level of a cargo space of the motor vehicle, also being pivotable from a horizontal pivoting position into a vertical pivoting position in which the platform closes the cargo space of the motor vehicle or is positioned behind a door which closes the cargo space, and conversely being pivotable from the vertical pivoting position into the horizontal pivoting position, or it being possible to bring the platform (6) into a stowed position below the cargo space of the motor vehicle, in which process mutually pivotable platform regions are pivoted with respect to one another and folded, and having a drive for the lift and pivot mechanism (8), the lifting, lowering and pivoting of the platform (6) or of parts of the platform being controlled by means of an electrical or electronic control apparatus (26, 26a, 26b), a remote control (40, 40a, 40b) for remotely controlling the electrical or electronic control apparatus (26, 26a, 26b) based on wireless and in particular digitally coded communication being provided having a hand-held operating part (42) which can be carried by the operator, having a first transmitting/receiving part (44a) associated with a first control apparatus (26a) for a first tail lift (2a) on the towing vehicle (90), and having a second transmitting/receiving part (44b) associated with a second control apparatus (26b) for a second tail lift (2b) on the trailer vehicle (92), the hand-held operating part (42) and the first and second transmitting/receiving parts (44a, 44b) comprising transmitting/receiving apparatuses (46, 48a, 48b) which are designed for wireless communication, **characterized in that** the state of at least one connection parameter between the towing vehicle (90) and the trailer vehicle (92) is detected, and **in that**, upon determination of a particular state of the connection parameter, the hand-held operating part (42) and the second transmitting/receiving part (44b) are automatically coupled such that the hand-held operating part (42) and the second transmitting/receiving part (44b) can be connected wirelessly by means of the remote control (40b) in order to operate the second tail lift (2b) of the trailer vehicle (92), and/or the first transmitting/receiving part (44a) and the second transmitting/receiving part (44b) are automatically coupled such that the hand-held operating part (42) and the first transmitting/receiving part (44a) and also the first and second transmitting/receiving parts (44a, 44b) can be connected wirelessly by means of the remote control (40a, 40b) in order to operate the second tail lift (2b) of the trailer vehicle (92), the coupling between the hand-held operating part (42) and at least one transmitting/receiving part (44a, 44b) or between the transmitting/receiving parts (44a, 44b) taking place in both cases by means of wirelessly exchanged signals.

2. Method according to claim 1, **characterized in that**, upon determination of a particular state of the connection parameter, a timer/timing device (96) is activated, and **in that** the hand-held operating part (42) and the second transmitting/receiving part (44b), and/or the first and second transmitting/receiving parts (44a, 44b), are automatically coupled only if the signals required for this purpose are exchanged within a predetermined time interval Δtmax.

3. Method according to claim 1 or claim 2, **characterized in that** the state of at least one connection parameter for the towing vehicle (90) and of at least one connection parameter for the trailer vehicle (92) is detected, and upon determination of a particular state of the connection parameter for the towing vehicle, a timer/timing device (96a) is activated in the towing vehicle (90), and **in that**, upon determination of a particular state of the connection parameter for the trailer, a timer/timing device (96b) is activated in the trailer (92), and **in that**, following the activation of the relevant timer/timing device (96a, 96b), signals are transmitted by the first transmitting/receiving part (44a) of the towing vehicle and by the second transmitting/receiving part (44b) of the trailer vehicle, which signals each carry time information obtained by the associated timer/timing device (96a, 96b), and **in that** the time information of these signals is compared and checked as to whether they differ by less than a maximum value (Δtmax), and **in that**, if this is the case, the hand-held operating part (42) and the second transmitting/receiving part (44b) are automatically coupled such that the hand-held operating part (42) and the second transmitting/receiving part (44b) can be wirelessly connected by means of the remote control (40b) in order to operate the second tail lift (2b) of the trailer vehicle (92), and/or **in that**, if this is the case, the first transmitting/receiving part (44a) and the second transmitting/receiving part (44b) are automatically coupled such that the hand-held operating part (42) and the first transmitting/receiving part (44a) and also the first and the second transmitting/receiving parts (44a, 44b) can be wirelessly connected by means of the remote control (40a, 40b) in order to operate the second tail lift (2b) of the trailer vehicle (92).

4. Method according to claim 1, 2 or 3, **characterized in that** the connection parameter is the mechanical connection between the towing vehicle (90) and the trailer vehicle (92), or the pneumatic connection between the towing vehicle (90) and the trailer vehicle (92), or the electrical supply between the towing vehicle (90) and the trailer vehicle (92), or a CAN bus state, or a measured variable of an ABS sensor, or is derived from such.

5. Method according to one or more of the preceding claims, **characterized in that** the unplugging of an electrical connector from a parking receptacle and/or the insertion of an electrical connector into a receptacle on the towing vehicle (90) or on the trailer vehicle (92) is used, and detected, as a connection parameter.

6. Method according to one or more of the preceding claims, **characterized in that**, after the hand-held operating part (42) and the second transmitting/receiving part (44b), and/or the first transmitting/receiving part (44a) and the second transmitting/receiving part (44b) have been coupled, the second tail lift (2b) of the trailer vehicle (92) can be switched on, i.e. supplied with control voltage, via remote control by means of the hand-held operating part (42).

7. Method according to one or more of the preceding claims, **characterized in that** the coupling of the hand-held operating part (42) and the second transmitting/receiving part (44b) and/or the coupling of the first transmitting/receiving part (44a) and the second transmitting/receiving part (44b) is stored in a memory apparatus.

8. Method according to one or more of the preceding claims, **characterized in that**, after the hand-held operating part (42) and the first or second transmitting/receiving part (44a, 44b) have been coupled, the hand-held operating part (42) is actively registered at the transmitting/receiving part (44a or 44b) of the trailer vehicle or of the towing vehicle in order to then adjust the lift and pivot mechanism (8, 8a, 8b) via remote control by means of the hand-held operating part (42).

9. Method according to one or more of the preceding claims, **characterized in that** the active registration of the hand-held operating part (42) at the first or second transmitting/receiving part (44a, 44b) is disconnected again, or can be disconnected by means of the hand-held operating part (42), or is automatically disconnected again after the occurrence of conditions.

10. Device for carrying out the method according to one or more of the preceding claims in a motor vehicle comprising a towing vehicle (90) and a trailer vehicle (92) which is connectable thereto, having a relevant lift and pivot mechanism (8, 8a, 8b) mounted on the motor vehicle by means of connecting components, which mechanism can be motor driven, in particular hydraulically driven, having a platform (6) which can be raised and lowered by means of the lift and pivot mechanism (8, 8a, 8b) and can be held in a selected position in all lifting positions, the platform (6), when raised to the level of a cargo space of the motor vehicle, also being pivotable from a horizontal pivoting position into a vertical pivoting position in which the platform closes the cargo space of the motor vehicle or is positioned behind a door which closes the cargo space, and conversely being pivotable from the vertical pivoting position into the horizontal pivoting position, or it being possible to bring the platform (6) into a stowed position below the cargo space of the motor vehicle, in which process mutually pivotable platform regions are pivoted with respect to one another and folded, and having a drive for the lift and pivot mechanism (8, 8a, 8b), the lifting, lowering and pivoting of the platform (6) or of parts of the platform being controlled by means of a relevant electrical or electronic control apparatus (26, 26a, 26b), a remote control (40, 40a, 40b) for remotely controlling the electrical or electronic control apparatus (26, 26a, 26b) based on wireless and in particular digitally coded communication being provided having a hand-held operating part (42) which can be carried by the operator, having a first transmitting/receiving part (44a) associated with a first control apparatus (26a) for a first tail lift (2a) on the towing vehicle (90), and having a second transmitting/receiving part (44b) associated with a second control apparatus (26b) for a second tail lift (2b) on the trailer vehicle (92), the hand-held operating part (42) and the first and second transmitting/receiving parts (44a, 44b) comprising transmitting/receiving apparatuses (46, 48a, 48b) which are designed for wireless communication, **characterized in that** a device (94, 94a, 94b) is provided for detecting the state of a connection parameter between the towing vehicle (90) and the trailer vehicle (92), and **in that** the remote control (40, 40a, 40b) is designed such that, upon determination of a particular state of the connection parameter by means of the device (94, 94a, 94b), the hand-held operating part (42) and the second transmitting/receiving part (44b) are automatically coupled such that the hand-held operating part (42) and the second transmitting/receiving part (44b) can be wirelessly connected by means of the remote control (40b) in order to operate the second tail lift (2b) of the trailer vehicle (92) and/or the first transmitting/receiving part (44a) and the second transmitting/receiving part (44b) are automatically coupled such that the hand-held operating part (42) and the first transmitting/receiving part (44a) and also the first and second transmitting/receiving parts (44a, 44b) can be wirelessly connected by means of the remote control (40a, 40b) in order to operate the second tail lift (2b) of the trailer vehicle (92), the coupling between the hand-held operating part (42) and at least one transmitting/receiving part (44a, 44b) or between the transmitting/receiving parts (44a, 44b) taking place in both cases by means of wirelessly exchanged signals.

11. Device according to claim 10, **characterized in that** a timer/timing device (96, 96a, 96b) is provided which is activated upon determination of a particular state of the connection parameter, and **in that** the remote control (40, 40a, 40b) is further designed such that the hand-held operating part (42) and the second transmitting/receiving part (44b), and/or the first and second transmitting/receiving parts (44a, 44b), are automatically coupled only if the signals required for this purpose are exchanged within a predetermined time interval Δtmax.

12. Device according to claim 11, **characterized in that** the towing vehicle and the trailer vehicle are each provided with a device (94a, 94b) for detecting the state of a connection parameter between the towing vehicle (90) and the trailer vehicle (92), and with a timer/timing device (96a, 96b), the activation of the relevant timer/timing device (96a, 96b) being triggered by the determination of a particular state of the connection parameter, and **in that** the hand-held operating part (42), the first and second transmitting/receiving parts (44a, 44b), the transmitting/receiving apparatuses (46, 48a, 48b) thereof and the associated electrical or electronic control apparatuses (26a, 26b) are designed such that, following the activation of the relevant timer/timing device (96a, 96b), signals are transmitted by the first transmitting/receiving part (44a) of the towing vehicle and by the second transmitting/receiving part (44b) of the trailer vehicle, which signals each carry time information obtained by the associated timer/timing device (96a, 96b), and **in that** a comparison device (98) is provided, by means of which the time information of these signals is compared and checked as to whether they differ by less than a maximum value (Δtmax) and **in that**, if this is the case, the hand-held part (42) and the second transmitting/receiving part (44b) are automatically coupled such that the hand-held operating part (42) and the second transmitting/receiving part (44b) can be wirelessly connected by means of the remote control (40b) in order to operate the second tail lift (2b) of the trailer vehicle (92), and/or **in that**, if this is the case, the first transmitting/receiving part (44b) and the second transmitting/receiving part (44b) are automatically coupled such that the hand-held operating part (42) and the first transmitting/receiving part (44a) and also the first and second transmitting/receiving parts (44a, 44b) can be wirelessly connected by means of the remote control (40a, 40b) in order to operate the second tail lift (2b) of the trailer vehicle (92).

13. Device according to one or more of claims 10-12, **characterized in that** the device (94) is designed to detect the state of the connection parameter, the mechanical connection between the towing vehicle (90) and the trailer vehicle (92), or the pneumatic connection between the towing vehicle (90) and the trailer vehicle (92), or the electrical supply between the towing vehicle (90) and the trailer vehicle (92), or to detect a CAN bus state, or a measured variable of an ABS sensor.

14. Device according to one or more of claims 10-13, **characterized in that** the device (94) for detecting the state of the connection parameter is designed to detect the unplugging of an electrical connector from a parking receptacle and/or for detecting the insertion of an electrical connector into a receptacle on the towing vehicle or on the trailer vehicle.

15. Device according to one or more of claims 10-14, **characterized in that** the hand-held control unit (42) is designed to register at the transmitting/receiving part (44b, 44a) of the trailer vehicle or the towing vehicle after the hand-held operating part (42) and the first or second transmitting/receiving part (44a, 44b) have been coupled, and to then adjust the lift and pivot mechanism (8, 8a, 8b) concerned using the remote control (40) by means of the hand-held operating part (42).

## Revendications

1. Procédé pour faire fonctionner un hayon élévateur (2, 2a, 2b) pour un véhicule à moteur comprenant un véhicule tracteur (90) et un véhicule tracté (92) pouvant être relié à celui-ci, avec un mécanisme de levage et de pivotement (8) concerné monté sur le véhicule à moteur au moyen de composants de raccordement (18), lequel mécanisme peut être à entraînement motorisé, en particulier hydraulique, avec une plateforme (6) pouvant être levée et baissée au moyen du mécanisme de levage et de pivotement (8), qui peut être retenue dans une position choisie dans toutes les positions de levage, dans lequel la plateforme (6) peut en outre, dans l'état levé au niveau d'un espace de chargement du véhicule à moteur, pivoter d'une position de pivotement horizontale dans une position de pivotement verticale, dans laquelle elle ferme l'espace de chargement du véhicule à moteur ou est positionnée derrière une porte fermant l'espace de chargement, et inversement peut pivoter de la position de pivotement verticale dans la position de pivotement horizontale,
ou
dans lequel la plateforme (6) peut être amenée dans une position escamotée au-dessous de l'espace de chargement du véhicule à moteur et à cette occasion les zones de plateforme pouvant pivoter les unes par rapport aux autres sont amenées à pivoter mutuellement et pliées,
et avec un entraînement pour le mécanisme de levage et de pivotement (8),
dans lequel le levage et l'abaissement et le pivotement de la plateforme (6) ou de parties de plateforme sont commandés au moyen d'un dispositif de commande électrique ou électronique (26, 26a, 26b), dans lequel une commande à distance (40, 40a, 40b) destinée à commander à distance le dispositif de commande électrique ou électronique (26, 26a, 26b) sur la base d'une communication sans fil et en particulier codée numériquement est pourvue d'un élément de commande manuelle (42) pouvant être porté par l'utilisateur et d'un premier élément d'émission/de réception (44a) associé à un premier dispositif de commande (26a) pour un premier hayon élévateur (2a) pour le véhicule tracteur (90) et d'un deuxième élément d'émission/de réception (44b) associé à un deuxième dispositif de commande (26b) pour un deuxième hayon élévateur (2b) pour le véhicule tracté (92), dans lequel l'élément de commande manuelle (42) et les premier et deuxième éléments d'émission/de réception (44a, 44b) comprennent des dispositifs d'émission/de réception (46, 48a, 48b), qui sont conçus pour la communication sans fil, **caractérisé**
**en ce que** l'état d'au moins un paramètre de liaison entre le véhicule tracteur (90) et le véhicule tracté (92) est détecté et **en ce que**, lors de l'établissement d'un état défini du paramètre de liaison, un couplage de l'élément de commande manuelle (42) et du deuxième élément d'émission/de réception (44b) est réalisé automatiquement, de telle sorte que l'élément de commande manuelle (42) et le deuxième élément d'émission/de réception (44b) peuvent être reliés sans fil pour commander le deuxième hayon élévateur (2b) du véhicule tracté (92) par l'intermédiaire de la commande à distance (40b),
et/ou
un couplage du premier élément d'émission/de réception (44a) et du deuxième élément d'émission/de réception (44b) est réalisé automatiquement, de telle sorte que l'élément de commande manuelle (42) et le premier élément d'émission/de réception (44a) et en outre le premier et le deuxième élément d'émission/de réception (44a, 44b) peuvent être reliés sans fil pour commander le deuxième hayon élévateur (2b) du véhicule tracté (92) par l'intermédiaire de la commande à distance (40a, 40b),
dans lequel le couplage s'effectue dans les deux cas au moyen de signaux échangés sans fil entre l'élément de commande manuelle (42) et au moins un élément d'émission/de réception (44a, 44b) ou entre les éléments d'émission/de réception (44a, 44b).

2. Procédé selon la revendication 1, **caractérisé en ce que**, lors de l'établissement d'un état défini du paramètre de liaison, un dispositif de mesure de temps/minuteur (96) est activé et **en ce que** le couplage de l'élément de commande manuelle (42) et du deuxième élément d'émission/de réception (44b) et/ou le couplage du premier et du deuxième élément d'émission/de réception (44a, 44b) ne sont réalisés automatiquement que dans la mesure où des signaux nécessaires à cela sont échangés pendant un intervalle de temps Δtmax prédéfini.

3. Procédé selon la revendication 1 ou 2, **caractérisé en ce que** l'état d'au moins un paramètre de liaison pour le véhicule tracteur (90) et d'au moins un paramètre de liaison pour le véhicule tracté (92) est détecté et **en ce que**, lors de l'établissement d'un état défini du paramètre de liaison pour le véhicule tracteur, un dispositif de mesure de temps/minuteur (96a) pour le véhicule tracteur (90) est activé, et **en ce que**, lors de l'établissement d'un état défini du paramètre de liaison pour le véhicule tracté, un dispositif de mesure de temps/minuteur (96b) pour le véhicule tracté (92) est activé,
et **en ce que**, à la suite de l'activation du dispositif de mesure de temps/minuteur (96a, 96b) respectif, des signaux sont envoyés par le premier élément d'émission/de réception (44a) du véhicule tracteur et par le deuxième élément d'émission/de réception (44b) du véhicule tracté, lesquels portent chacun une information de temps obtenue par le dispositif de mesure de temps/minuteur (96a, 96b) associé,
et **en ce que** les informations de temps de ces signaux sont comparées et il est vérifié s'ils se différencient de moins d'une valeur maximale (Δtmax),
et **en ce que**, si tel est le cas, un couplage de l'élément de commande manuelle (42) et du deuxième élément d'émission/de réception (44b) est réalisé automatiquement, de telle sorte que l'élément de commande manuelle (42) et le deuxième élément d'émission/de réception (44b) peuvent être reliés sans fil pour commander le deuxième hayon élévateur (2b) du véhicule tracté (92) par l'intermédiaire de la commande à distance (40b),
et/ou,
**en ce que**, si tel est le cas, un couplage du premier élément d'émission/de réception (44a) et du deuxième élément d'émission/de réception (44b) est réalisé automatiquement, de telle sorte que l'élément de commande manuelle (42) et le premier élément d'émission/de réception (44a) et en plus le premier et le deuxième élément d'émission/de réception (44a, 44b) peuvent être reliés sans fil pour commander le deuxième hayon élévateur (2b) du véhicule tracté (92) par l'intermédiaire de la commande à distance (40a, 40b).

4. Procédé selon la revendication 1, 2 ou 3, **caractérisé en ce que** le paramètre de liaison est la liaison mécanique entre le véhicule tracteur (90) et le véhicule tracté (92) ou la liaison pneumatique entre le véhicule tracteur (90) et le véhicule tracté (92) ou l'alimentation électrique entre le véhicule tracteur (90) et le véhicule tracté (92) ou un état de bus CAN ou est une grandeur de mesure d'un capteur ABS ou est dérivé de ceux-ci.

5. Procédé selon l'une ou plusieurs des revendications précédentes, **caractérisé en ce que** le débranchement d'un connecteur électrique d'un logement de stationnement et/ou le branchement d'un connecteur électrique dans un logement sur le véhicule tracteur (90) ou sur le véhicule tracté (92) sont utilisés comme paramètre de liaison et sont détectés.

6. Procédé selon l'une ou plusieurs des revendications précédentes, **caractérisé en ce que**, après la réalisation du couplage de l'élément de commande manuelle (42) et du deuxième élément d'émission/de réception (44b) et/ou du couplage du premier élément d'émission/de réception (44a) et du deuxième élément d'émission/de réception (44b), le deuxième hayon élévateur (2b) du véhicule tracté (92) peut être activé, c'est-à-dire peut être alimenté en tension de commande, par l'élément de commande manuelle (42) au moyen de la commande à distance.

7. Procédé selon l'une ou plusieurs des revendications précédentes, **caractérisé en ce que** le couplage de l'élément de commande manuelle (42) et du deuxième élément d'émission/de réception (44b) et/ou le couplage du premier élément d'émission/de réception (44a) et du deuxième élément d'émission/de réception (44b) sont mis en mémoire dans un dispositif mémoire.

8. Procédé selon l'une ou plusieurs des revendications précédentes, **caractérisé en ce que**, après le couplage de l'élément de commande manuelle (42) et du premier ou deuxième élément d'émission/de réception (44a, 44b), une connexion active de l'élément de commande manuelle (42) à l'élément d'émission/de réception (44a ou 44b) du véhicule tracté ou du véhicule tracteur est réalisée, afin de déplacer le mécanisme de levage et de pivotement (8, 8a, 8b) au moyen de la commande à distance à l'aide de l'élément de commande manuelle (42).

9. Procédé selon l'une ou plusieurs des revendications précédentes, **caractérisé en ce que** la connexion active de l'élément de commande manuelle (42) au premier ou deuxième élément d'émission/de réception (44a, 44b) est à nouveau rompue ou peut être à nouveau rompue par l'élément de commande manuelle (42) ou être à nouveau automatiquement rompue après l'entrée de conditions.

10. Dispositif pour la mise en oeuvre du procédé selon l'une ou plusieurs des revendications précédentes pour un véhicule à moteur comprenant un véhicule tracteur (90) et un véhicule tracté (92) pouvant être relié à celui-ci, avec un mécanisme de levage et de pivotement (8, 8a, 8b) concerné monté sur le véhicule à moteur au moyen de composants de raccordement, lequel mécanisme peut être à entraînement motorisé, en particulier hydraulique, avec une plateforme (6) pouvant être levée et baissée à l'aide du mécanisme de levage et de pivotement (8, 8a, 8b), qui peut être retenue dans une position choisie dans toutes les positions de levage, dans lequel la plateforme (6) peut en outre, dans l'état levé au niveau d'un espace de chargement du véhicule à moteur, pivoter d'une position de pivotement horizontale dans une position de pivotement verticale, dans laquelle elle ferme l'espace de chargement du véhicule à moteur ou est positionnée derrière une porte fermant l'espace de chargement, et inversement peut pivoter de la position de pivotement verticale dans la position de pivotement horizontale,
ou
dans lequel la plateforme (6) peut être amenée dans une position escamotée au-dessous de l'espace de chargement du véhicule à moteur et à cette occasion des zones de plateforme pouvant pivoter les unes par rapport aux autres sont amenées à pivoter mutuellement et pliées,
et avec un entraînement pour le mécanisme de levage et de pivotement (8, 8a, 8b), dans lequel le levage et l'abaissement et le pivotement de la plateforme (6) ou de parties de plateforme sont commandés au moyen d'un dispositif de commande électrique ou électronique (26, 26a, 26b) respectif, dans lequel une commande à distance (40, 40a, 40b) destinée à commander à distance le dispositif de commande électrique ou électronique (26, 26a, 26b) sur la base d'une communication sans fil et en particulier codée numériquement est pourvue d'un élément de commande manuelle (42) pouvant être porté par l'utilisateur et d'un premier élément d'émission/de réception (44a) associé à un premier dispositif de commande (26a) pour un premier hayon élévateur (2a) pour le véhicule tracteur (90) et d'un deuxième élément d'émission/de réception (44b) associé à un deuxième dispositif de commande (26b) pour un deuxième hayon élévateur (2b) dans le véhicule tracté (92), dans lequel l'élément de commande manuelle (42) et les premier et deuxième éléments d'émission/de réception (44a, 44b) comprennent des dispositifs d'émission/de réception (46, 48a, 48b), qui sont conçus pour la communication sans fil, **caractérisé en ce qu'**un dispositif (94, 94a, 94b) destiné à détecter l'état d'un paramètre de liaison entre le véhicule tracteur (90) et le véhicule tracté (92) est prévu et **en ce que** la commande à distance (40, 40a, 40b) est conçue de sorte que, lors de l'établissement d'un état défini du paramètre de liaison par le dispositif (94, 94a, 94b)
un couplage de l'élément de commande manuelle (42) et du deuxième élément d'émission/de réception (44b) est réalisé automatiquement, de telle sorte que l'élément de commande manuelle (42) et le deuxième élément d'émission/de réception (44b) peuvent être reliés sans fil pour commander le deuxième hayon élévateur (2b) du véhicule tracté (92) par l'intermédiaire de la commande à distance (40b),
et/ou
un couplage du premier élément d'émission/de réception (44a) et du deuxième élément d'émission/de réception (44b) est réalisé automatiquement, de telle sorte que l'élément de commande manuelle (42) et le premier élément d'émission/de réception (44a) et en plus le premier et le deuxième élément d'émission/de réception (44a, 44b) peuvent être reliés sans fil pour commander le deuxième hayon élévateur (2b) du véhicule tracté (92) par l'intermédiaire de la commande à distance (40a, 40b),
dans lequel le couplage s'effectue dans les deux cas au moyen de signaux échangés sans fil entre l'élément de commande manuelle (42) et au moins un élément d'émission/de réception (44a, 44b) ou entre les éléments d'émission/de réception (44a, 44b).

11. Dispositif selon la revendication 10, **caractérisé en ce qu'**un dispositif de mesure de temps/minuteur (96, 96a, 96b) est prévu, qui est activé lors de l'établissement d'un état défini du paramètre de liaison et **en ce que** la commande à distance (40, 40a, 40b) est conçue en plus de sorte que le couplage de l'élément de commande manuelle (42) et du deuxième élément d'émission/de réception (44b) et/ou le couplage du premier et du deuxième élément d'émission/de réception (44a, 44b) ne sont réalisés automatiquement que dans la mesure où des signaux nécessaires à cela sont échangés pendant un intervalle de temps Δtmax prédéfini.

12. Dispositif selon la revendication 11, **caractérisé en ce que**, pour le véhicule tracteur et pour le véhicule tracté, respectivement un dispositif (94a, 94b) destiné à détecter l'état d'un paramètre de liaison entre le véhicule tracteur (90) et le véhicule tracté (92) et respectivement un dispositif de mesure de temps/minuteur (96a, 96b) sont prévus, dans lequel l'activation du dispositif de mesure de temps/minuteur (96a, 96b)) respectif est déclenchée par établissement d'un état défini du paramètre de liaison, et **en ce que** l'élément de commande manuelle (42), les premier et deuxième éléments d'émission/de réception (44a, 44b), ainsi que leurs dispositifs d'émission/de réception (46, 48a, 48b) et les dispositifs de commande électriques ou électroniques (26a, 26b) associés sont conçus de sorte que, à la suite de l'activation du dispositif de mesure de temps/minuteur (96a, 96b) respectif, des signaux sont envoyés par le premier élément d'émission/de réception (44a) du véhicule tracteur et par le deuxième élément d'émission/de réception (44b) du véhicule tracté, lesquels portent chacun une information de temps obtenue par le dispositif de mesure de temps/minuteur (96a, 96b) associé,
et **en ce qu'**un dispositif de comparaison (98) est prévu, au moyen duquel les informations de temps de ces signaux sont comparées et il est vérifié s'ils se différencient de moins d'une valeur maximale (Δtmax),
et **en ce que**, si tel est le cas, un couplage de l'élément de commande manuelle (42) et du deuxième élément d'émission/de réception (44b) est réalisé automatiquement, de telle sorte que l'élément de commande manuelle (42) et le deuxième élément d'émission/de réception (44b) peuvent être reliés sans fil pour commander le deuxième hayon élévateur (2b) du véhicule tracté (92) par l'intermédiaire de la commande à distance (40b),
et/ou,
**en ce que**, si tel est le cas, un couplage du premier élément d'émission/de réception (44b) et du deuxième élément d'émission/de réception (44b) est réalisé de telle sorte que l'élément de commande manuelle (42) et le premier élément d'émission/de réception (44a) et en plus le premier et le deuxième élément d'émission/de réception (44a, 44b) peuvent être reliés sans fil pour commander le deuxième hayon élévateur (2b) du véhicule tracté (92) par l'intermédiaire de la commande à distance (40a, 40b).

13. Dispositif selon l'une ou plusieurs des revendications 10 à 12, **caractérisé en ce que** le dispositif (94) destiné à détecter l'état du paramètre de liaison est conçu pour détecter la liaison mécanique entre le véhicule tracteur (90) et le véhicule tracté (92) ou la liaison pneumatique entre le véhicule tracteur (90) et le véhicule tracté (92) ou l'alimentation électrique entre le véhicule tracteur (90) et le véhicule tracté (92) ou un état de bus CAN ou une grandeur de mesure d'un capteur ABS.

14. Dispositif selon l'une ou plusieurs des revendications 10 à 13, **caractérisé en ce que** le dispositif (94) destiné à détecter l'état du paramètre de liaison est conçu pour détecter le débranchement d'un connecteur électrique d'un logement de stationnement et/ou pour détecter le branchement d'un connecteur électrique dans un logement sur le véhicule tracteur ou sur le véhicule tracté.

15. Dispositif selon l'une ou plusieurs des revendications 10 à 14, **caractérisé en ce que** l'élément de commande manuelle (42), après le couplage de l'élément de commande manuelle (42) et du premier ou deuxième élément d'émission/de réception (44a, 44b), est conçu pour la connexion à l'élément d'émission/de réception (44b, 44a) du véhicule tracté ou du véhicule tracteur, afin de déplacer alors le mécanisme de levage et de pivotement (8, 8a, 8b) concerné au moyen de la commande à distance (40) à l'aide de l'élément de commande manuelle (42).
